# EUROPÄISCHE PATENTSCHRIFT

(11) **EP 2 346 757 B1**
(45) Veröffentlichungstag und Bekanntmachung des Hinweises auf die Patenterteilung: **10.07.2013**
(21) Anmeldenummer: 09744656.1
(22) Anmeldetag: 19.10.2009
(51) Int. Cl.: B65G 47/14, B67B 3/064

(54) **VORRICHTUNG ZUM VEREINZELN UND LAGEAUSRICHTEN VON METALLISCHEN BEHÄLTERVERSCHLÜSSEN**
DEVICE FOR SEPARATING AND ALIGNING THE POSITION OF METAL CONTAINER SEALS
DISPOSITIF DE SÉPARATION ET DE POSITIONNEMENT DE FERMETURES MÉTALLIQUES DE CONTENANT

(30) Priorität: 17.10.2008 AT 59708 U
(43) Veröffentlichungstag der Anmeldung: 27.07.2011
(73) Patentinhaber: Gassner GmbH, 4890 Frankenmarkt (AT)
(72) Erfinder: GASSNER, Wolfgang, A-4890 Frankenmarkt (AT)
(74) Vertreter: Henhapel, Bernhard
(86) Internationale Anmeldenummer: PCT/EP2009/063672
(87) Internationale Veröffentlichungsnummer: WO 2010/043720

(56) Entgegenhaltungen:
- EP-A1- 0 699 605
- DE-A1- 1 918 627
- DE-A1- 3 603 159
- DE-A1-102004 030 667
- FR-A1- 2 876 990
- JP-A- 54 000 366
- JP-A- 55 016 827
- JP-U- 57 065 738
- US-A- 3 106 281
- US-A- 5 333 718
- US-A- 5 394 972
- US-A1- 2005 077 216

## Beschreibung

### GEBIET DER ERFINDUNG

Die vorliegende Erfindung bezieht sich auf eine Vorrichtung zum Vereinzeln und Lageausrichten von metallischen Behälterverschlüssen sowie zum Befördern der vereinzelten und lageausgerichteten Behälterverschlüsse, vorzugsweise Kronenkorken, zu einer Weiterverarbeitungsmaschine, vorzugsweise Verschliessmaschine, wobei die Vorrichtung zumindest einen Vorratsbehälter für die Behälterverschlüsse umfasst, sowie zumindest einen Entnahmeförderer zur Entnahme und Vororientierung der Behälterverschlüsse aus dem mindestens einen Vorratsbehälter, wobei der mindestens eine Entnahmeförderer in Betriebsstellung der Vorrichtung einen Steilförderabschnitt aufweist, dessen Förderoberfläche mit der Aufstandsebene einen Winkel > 30°, vorzugsweise > 80° einschließt, sowie zumindest eine, die vereinzelten und lageausgerichteten Behälterverschlüsse zur Verschliessmaschine transportierende Fördereinheit, welche die Behälterverschlüsse mittels einer Auflagefläche an jeweils einer Referenzoberfläche der Behälterverschlüsse kontaktiert, sowie eine Übergabestation, in welche die Behälterverschlüsse quer zur Förderrichtung des mindestens einen Entnahmeförderers vom Steilförderabschnitt ausgeblasen werden und mittels welcher die Behälterverschlüsse vereinzelt und lageorientiert an die Fördereinheit übergeben werden, wobei ein unmittelbar nach der Übergabestation angeordneter erster Förderabschnitt der die vereinzelten und lageausgerichteten Behälterverschlüsse befördernden mindestens einen Fördereinheit eine von der Aufstandsebene der Vorrichtung wegweisende Förderrichtungskomponente aufweist, gemäß dem Oberbegriff des Anspruchs 1.

### STAND DER TECHNIK

Solche Vorrichtungen kommen in Behälterabfüllbetrieben zum Einsatz und dienen der exakten Zuführung der Behälterverschlüsse zu einer Verschliessmaschine, welche die Behälterverschlüsse an den Behältern befestigt, um diese zu verschließen.

Während frühere Vorrichtungen dieser Art nahezu zur Gänze oberhalb der Verschliessmaschine angeordnet waren, wodurch die Vereinzelung und das Lageausrichten der Behälterverschlüsse praktisch direkt oberhalb der geöffneten, zu verschließenden Behälter stattgefunden hat, ist man in jüngerer Zeit dazu übergegangen, die Vereinzelung und das Lageausrichten der Behälterverschlüsse abseits der Verschliessmaschine durchzuführen, wodurch der bei der Manipulation der Behälterverschlüsse unweigerlich entstehende Abrieb und Staub von den offenen Behältern ferngehalten wird.

Dies führte dazu, dass die bereits vereinzelten und lageausgerichteten Behälterverschlüsse über eine längere Distanz zur Verschliessmaschine befördert werden müssen, wobei die Behälterverschlüsse der Verschliessmaschine in der Regel von oben zugeführt werden, so dass die Behälterverschlüsse nicht nur über eine horizontale Distanz befördert werden müssen sondern auch über eine vertikale Distanz. Übliche Vorrichtungen sind daher so aufgebaut, dass die Behälterverschlüsse am Ort der Aufgabe als unsortiertes bzw. lediglich vorsortiertes Schüttgut zuerst in eine gewisse Höhe transportiert werden und die horizontale Beförderung dann in dieser Höhe zur Verschliessmaschine erfolgt. Dies hat den Vorteil, dass die Aufstandsebene der Vorrichtung als solches sehr klein gehalten werden kann und die horizontale Beförderung der Behälterverschlüsse in der Höhe (übliche Höhen sind in etwa 3m bis 6m) keine wertvolle Standfläche für andere Maschinen belegt, da der unterhalb des in der Höhe verlaufenden Förderweges vorhandene Platz anderweitig genutzt werden kann.

Aus der US 6,491,152, der US 5,586,637, US 1,933,320 und der US 5,394,972 sind beispielsweise solche Vorrichtungen bekannt, mit einem Entnahmeförderer, der die Behälterverschlüsse (Kronenkorken) aus einem Vorratsbehälter entnimmt, vororientiert und sofort auf eine Höhe transportiert, die über der Höhe liegt, die für die horizontale Weiterbeförderung der Behälterverschlüsse erforderlich ist. Grund hierfür ist der Umstand, dass die Übergabestation, in welcher die Vereinzelung und Lageorientierung der Behälterverschlüsse sowie die Übergabe auf eine Fördereinheit sowie der Weitertransport auf dieser Fördereinheit in dieser Höhe erfolgt, wobei die Übergabestation so ausgebildet ist, dass die Vereinzelung und Lageausrichtung durch seitliches Ausschieben aus dem Entnahmeförderer in einen Kanal erfolgt, der in einem ersten Abschnitt leicht in Richtung Boden geneigt ist. Dieses System hat sich in der Praxis jedoch als problembehaftet erwiesen, da es einerseits unnötig hoch baut, nämlich höher als es in Bezug auf die Fördereinheit eigentlich notwenig wäre, andererseits aber, was noch schwerer wiegt, die Übergabestation, also der Bereich der Vereinzelung und Lageausrichtung, in einer Höhe erfolgt, die ohne Hilfsmittel nicht erreichbar ist. Da es sich aber bei solchen Vorrichtungen bei der Übergabestation um jenen Bauteil der Vorrichtung handelt, wo Störungen aufgrund von Verklemmungen oder defekten Behälterverschlüssen am wahrscheinlichsten sind, ist die Wartung und Störungsbehebung bei solchen Vorrichtungen stark erschwert bzw. dauert die Störungsbehebung unnötig lange.

Auch aus der DE 197 00 512 B4 ist eine solche Vorrichtung bekannt. Auch hier ist die Übergabestation in großer Höhe angeordnet und müssen die Behälterverschlüsse erst wieder auf eine niedrigere Höhe transportiert werden, um dann horizontal weiterbefördert werden zu können.

Aus der FR 2 876 990 A1 ist eine gattungsgemäße Vorrichtung zum Sortieren und Vereinzeln von Schraubverschlüssen aus Kunststoff bekannt, bei welcher die Beförderung der Schraubverschlüsse zur Verschliessmaschine zwar auch in einer gewissen, ohne Hilfsmittel unzugänglichen Höhe erfolgt, deren Übergabestation jedoch aus den oben genannten Gründen in Bodennähe angeordnet ist. Um die Schraubverschlüsse aus der Übergabestation zur Verschliessmaschine und damit auch in die erwähnte Höhe zu befördern, ist ein Gebläse vorgesehen, welches die Behälterverschlüsse mittels Luftstrom aus der Übergabestation nach oben befördert. Eine solche Vorrichtung ist zum Vereinzeln und Lageausrichten von metallischen Behälterverschlüssen, insbesondere Kronenkorken nicht geeignet, da diese für die Beförderung mittels Luftstrom nach oben zu schwer sind.

### DARSTELLUNG DER ERFINDUNG

Es ist daher die Aufgabe der vorliegenden Erfindung eine Vorrichtung zum Vereinzeln und Lageausrichten von metallischen Behälterverschlüssen sowie zum Befördern der vereinzelten und lageausgerichteten Behälterverschlüsse, vorzugsweise Kronenkorken, zu einer Weiterverarbeitungsmaschine, zu schaffen, die diese Nachteile verhindert, wartungsfreundlich ist und einfachen Zugang zu --der Übergabestation ohne Hilfsmittel ermöglicht.

Es ist eine weitere Aufgabe der vorliegenden Erfindung, dabei den bei der Beförderung von metallischen Behälterverschlüssen besonderen Anforderungen hinsichtlich Verbiegen und Zerkratzen Rechnung zu tragen.

Erfindungsgemäß wird dies durch die kennzeichnenden Merkmale des Anspruchs 1 erreicht.

Dabei ist bei einer Vorrichtung zum Vereinzeln und Lageausrichten von metallischen Behälterverschlüssen sowie zum Befördern der vereinzelten und lageausgerichteten Behälterverschlüsse, vorzugsweise Kronenkorken, zu einer Verschliessmaschine, wobei die Vorrichtung zumindest einen Vorratsbehälter und/oder Aufgabeeinheit für die Behälterverschlüsse umfasst, sowie zumindest einen Entnahmeförderer zur Entnahme und Vororientierung der Behälterverschlüsse aus dem mindestens einen Vorratsbehälter, wobei der mindestens eine Entnahmeförderer in Betriebsstellung der Vorrichtung einen Steilförderabschnitt aufweist, dessen Förderoberfläche mit der Aufstandsebene einen Winkel > 30°, vorzugsweise > 80° einschließt, sowie zumindest eine, die vereinzelten und lageausgerichteten Behälterverschlüsse zur Verschliessmaschine transportierende Fördereinheit, welche die Behälterverschlüsse mittels einer Auflagefläche an jeweils einer Referenzoberfläche der Behälterverschlüsse kontaktiert, sowie eine Übergabestation, in welche die Behälterverschlüsse quer zur Förderrichtung des mindestens einen Entnahmeförderers vom Steilförderabschnitt ausgeblasen werden und mittels welcher die Behälterverschlüsse vereinzelt und lageorientiert an die Fördereinheit übergeben werden und wobei ein unmittelbar nach der Übergabestation angeordneter erster Förderabschnitt der die vereinzelten und lageausgerichteten Behälterverschlüsse befördernden Fördereinheit eine von der Aufstandsebene der Vorrichtung wegweisende Förderrichtungskomponente aufweist, vorgesehen, dass die mindestens eine Fördereinheit ein die Behälterverschlüsse förderndes Trum eines endlosen Fördergurtes oder Glieder- oder Plattenbandes umfasst, das entlang einer als Magnetbalken ausgebildeten, permanent- oder elektromagnetischen Förderbahn und - auf dieser zumindest abschnittsweise aufliegend bzw. in geringem Abstand zu dieser geführt ist und die Behälterverschlüsse aus der Übergabestation herausbefördert, wobei die Magnete des Magnetbalkens im wesentlichen stabförmig ausgebildet sind, mit deren Längsachse parallel zum Trum (2b) verlaufend, und wobei die Magnete zur Lenkung des magnetischen Felds in Richtung des Trums U-förmig mit Weicheisenelementen umgeben sind.

Unter dem ersten unmittelbar nach der Übergabestation angeordneten Förderabschnitt, wird jener Bereich der Fördereinheit verstanden, der von der Übergabestation unabhängig ist, dh. auf welchem die Behälterverschlüsse bereits vollkommen vereinzelt und lageorientiert sind und in welchem Förderabschnitt die Förderung der Behälterverschlüsse ausschließlich aufgrund der Förderbewegung der Fördereinheit erfolgt, dh. keine überlagerte Bewegung mit anderen Antrieben erfolgt.

Dadurch wird bewirkt, dass der Entnahmeförderer tatsächlich fast ausschließlich zur Entnahme der Behälterverschlüsse aus dem Vorratsbehälter sowie zur Vororientierung derselben dient, aber nicht eingesetzt wird, um die Behälterverschlüsse über eine nennenswerte Distanz in Richtung zur Verschliessmaschine zu transportieren bzw. um die Behälterverschlüsse in eine bestimmte Höhe zu transportieren, um sie dann in dieser Höhe zu vereinzeln und lageorientiert an die Fördereinheit zu übergeben.

Der Umstand, dass die die Behälterverschlüsse bereits vereinzelt und lageorientiert transportierende mindestens eine Fördereinheit eine von der Aufstandsebene der Vorrichtung wegweisende Förderrichtungskomponente aufweist, bewirkt weiters, dass eine rasche Vereinzelung und Lageorientierung der Behälterverschlüsse, bezogen auf die Aufgabe derselben, erfolgen kann, was in weiterer Folge wiederum dazu führt, dass die Übergabestation, in welcher die Vereinzelung und Lageorientierung der Behälterverschlüsse erfolgt und welche eine erhöhte Störungswahrscheinlichkeit aufweist , bereits in geringer Höhe angeordnet werden kann, die auch ohne Hilfsmittel wie Leitern oder Podeste erreicht werden kann. Unter Übergabestation wird in diesem Zusammenhang jede Art von Abschnitt der Vorrichtung verstanden, in welcher eine Übergabe der unorientierten oder vororientierten Behälterverschlüsse auf eine Fördereinheit erfolgt, auf welcher dann eine Weiterbeförderung der Behälterverschlüsse in vereinzelter und lageorientierter Ausrichtung erfolgt.

Im Zusammenhang mit ferro-metallischen Behälterverschlüssen ergibt sich auf diese Art und Weise eine besonders einfache und sichere Transportmöglichkeit derselben.

Gemäß einer weiteren bevorzugten Ausführungsvariante der Erfindung ist es vorgesehen, dass ein an den ersten Förderabschnitt anschließender zweiter, in Betriebsstellung der Vorrichtung im wesentlichen horizontal verlaufender Förderabschnitt der mindestens einen Fördereinheit vorgesehen ist, wobei die Krümmungsachse des Übergangs zwischen den beiden Förderabschnitten parallel zur Auflagefläche der Fördereinheit bzw. zur Referenzoberfläche der auf der Fördereinheit transportierten Behälterverschlüsse verläuft und der Übergang vorzugsweise umlenkrollenfrei und mit großem Radius erfolgt. Durch die Umlenkung der Behälterverschlüsse "nach hinten" über deren Referenzoberfläche ist ein sicherer Transport der Behälterverschlüsse möglich. Einerseits wird als Referenzoberfläche eine möglichst große Fläche des Behälterverschlusses gewählt werden, bei Kronenkorken beispielsweise deren Rückseite, so dass diese gut an der magnetischen Fördereinheit haften und andererseits wird aufgrund der Umlenkung "nach hinten" über diese Fläche verhindert, dass sich die Behälterverschlüsse auf der Fördereinheit bewegen können, was einerseits zu unerwünschtem Abrieb führen würde und andererseits aber die Behälterverschlüsse auch optisch beeinträchtigt, was vom Endkunden nicht akzeptiert werden würde.

Der vorzugsweise umlenkrollenfreie Übergang zwischen erstem und zweitem Förderabschnitt der Fördereinheit ermöglicht einerseits eine besonders sanfte Umlenkung und andererseits eine konstante magnetische Haltekraft auch in diesem Umlenkbereich.

Gemäß einer weiteren bevorzugten Ausführungsvariante der Erfindung ist es vorgesehen, dass die Übergabestation in einer Höhe gemessen von der Aufstandsebene der Vorrichtung zwischen 1m und 3m, vorzugsweise zwischen 1m und 2m angeordnet ist. Damit befindet sie sich in einer idealen Höhe um ohne Hilfsmittel gewartet bzw. repariert zu werden. Störungen können damit, im Gegensatz zu aus dem Stand der Technik bekannten, gattungsgleichen Vorrichtungen sofort vom Bedienpersonal behoben werden ohne Podest oder Leitern besteigen zu müssen. Auch das für eine möglicherweise erforderliche Reparatur bzw. Wartung notwendige Werkzeug muss nicht auf eine Höhe von 4m bis 6m gehoben werden.

In einer weiteren bevorzugten Ausführungsvariante der Erfindung ist es vorgesehen, dass die Übergabestation unmittelbar neben dem mindestens einen Entnahmeförderer angeordnet ist und einen im wesentlichen parallel zum Steilförderabschnitt des Entnahmeförderers angeordneten Boden sowie Deckel umfasst, wobei zumindest eine Beschickungsöffnung vorgesehen ist, über welche die Behälterverschlüsse vom Entnahmeförderer in die Übergabestation beförderbar sind. Durch das Ausbilden der Übergabestation als Kammer ergibt sich der Vorteil, dass bei Bedarf vororientierte Behälterverschlüsse von mehreren Entnahmeförderern in die Übergabestation transportiert werden können. Außerdem ergibt sich durch das Nebeneinanderanordnen von Entnahmeförderer und Übergabestation eine Verringerung der Bauhöhe der Vorrichtung.

Gemäß einer weiteren bevorzugten Ausführungsvariante der Erfindung ist es vorgesehen, dass der Abstand zwischen Boden und Deckel der Übergabestation das seitliche Beschicken der Übergabestation mit Behälterverschlüssen von dem mindestens einen Entnahmeförderer mit Bezug auf deren Referenzfläche lediglich in jener Lage ermöglicht, in welcher die Behälterverschlüsse im Entnahmeförderer transportiert werden. Die Übergabestation bildet somit eine Zwangsführung für die Behälterverschlüsse, so dass diese in die Übergabestation übergeführt werden können, ohne die Vororientierung, die sie durch den Entnahmeförderer aufgezwungen bekommen haben, zu verlieren.

In einer weiteren bevorzugten Ausführungsvariante der Erfindung ist es vorgesehen, dass ein Teilabschnitt der mindestens einen Fördereinheit einen Abschnitt des Bodens der Übergabestation bildet, so dass die von dem mindestens einen Entnahmeförderer in die Übergabestation beförderten und vororientierten Behälterverschlüsse abhängig zumindest von der Menge und der Geometrie der Übergabestation dem Zufallsprinzip folgend mit ihrer Referenzoberfläche auf der Fördereinheit zu liegen kommen. Aufgrund des Umstandes dass die Fördereinheit magnetisch ausgebildet ist, kann somit gewährleistet werden, dass die metallischen Behälterverschlüsse von der Fördereinheit aus der Übergabestation weitertransportiert werden, wobei durch geometrische Gestaltung der Übergabestation und/oder durch Stärke, Größe und Anordnung bzw. Gestalt des Magnetfeldes Einfluss auf die Vereinzeltungsleistung der Übergabestation genommen werden kann.

Um eine reibungslose Übergabe der Behälterverschlüsse an die Fördereinheit zu ermöglichen ist der Übergabepunkt, also jener vorbestimmte Bereich der Übergabestation, an welchem die Behälterverschlüsse von der Fördereinheit jedenfalls zwingend mitgenommen werden, entweder als tiefster oder als höchster Punkt einer in Betriebsstellung der Vorrichtung unteren Begrenzungswand der Übergabestation ausgebildet, die Boden und Deckel der Übergabestation miteinander verbindet.

Im Falle der Anordnung des Übergabepunktes als in Betriebsposition der Vorrichtung tiefster Punkt der unteren Begrenzungswand, ist dieser in Betriebsposition der Vorrichtung unterhalb der mindestens einen Beschickungsöffnung vorgesehen.

Die aus dem Entnahmeförderer über die Beschickungsöffnung in die Übergabestation beförderten Behälterverschlüsse fallen auf diese Art und Weise in die Übergabestation auf den tiefsten Punkt zu, um dann mittels der Fördereinheit vereinzelt und lageausgerichtet weiterbefördert zu werden.

Im Falle der Anordnung des Übergabepunktes als in Betriebsposition der Vorrichtung höchster Punkt der unteren Begrenzungswand kann dieser in Betriebsposition der Vorrichtung sowohl oberhalb als auch unterhalb bzw. auf gleicher Höhe der mindestens einen Beschickungsöffnung angeordnet sein.

Sowohl im Fall der Ausbildung des Übergabepunktes als höchster Punkt der unteren Begrenzungswand als auch im Falle der Ausbildung als tiefster Punkt der unteren Begrenzungswand ist der Übergabepunkt jedenfalls über oder vor (je nach Betrachtungsweise) der im Boden der Übergabestation vorgesehenen mindestens einen Fördereinheit positioniert. Diese Ausbildung der unteren Begrenzungswand hat den Vorteil, dass keine Behälterverschlüsse den nach oben erfolgenden Abtransport des von der Fördereinheit zum Abtransport aus der Übergabestation bereits erfassten Behälterverschlusses behindern können.

Der mindestens eine Entnahmeförderer ist in einer besonders bevorzugten Ausführungsvariante der Erfindung ein, vorzugsweise aus korrosions- und/oder säurebeständigem Stahl gefertigter, endloser Gliederbandförderer mit einem in den Vorratsbehälter eintauchenden Flachförderabschnitt, dessen einzelne Glieder in Förderrichtung gesehen einen ersten Endabschnitt aufweisen, der ein mit einer Fase versehenes Mitnahmeelement trägt, und einen zweiten Endabschnitt, in welchem die Glieder vorzusgsweise aufgekantet ausgebildet sind und der Bereich zwischen dem Mitnahmeelement und der vorzugsweisen Aufkantung zur Aufnahme der Behälterverschlüsse in einer Reihe nebeneinander vorgesehen ist. Die Fertigung des Gliederbandförderers aus korrosions- und/oder säurebeständigem Stahl hat den Vorteil, dass dieser sich statisch nicht auflädt und sehr verschleißfest ist, was insbesondere bei Kronenkorken als Behälterverschlüssen wichtig ist, da diese an der Krone sehr abrasiv wirken. Der Bereich zwischen Mitnahmeelement und Aufkantung kann auf einfache Art und Weise auf die Größe der Behälterverschlüsse abgestimmt werden. Die Gestalt des Mitnahmeelementes ist ideal auf die Form des Behälterverschlusses abgestimmt. Die Verringerung der Neigung des Flachförderabschnittes gegenüber dem Steilförderabschnitt ermöglicht die Erhöhung der Belegungsdichte des Entnahmeförderers.

Gemäß einer besonders bevorzugten Ausführungsvariante der Erfindung ist es vorgesehen, dass im Bereich der mindestens einen Beschickungsöffnung mindestens eine von einer Gebläseeinheit angesteuerte Ausblasöffnung angeordnet ist, um die Behälterverschlüsse vom mindestens einen Entnahmeförderer reihenweise in die Übergabestation zu befördern. Dabei kann entweder Reihe für Reihe einzeln in die Übergabestation befördert werden oder aber mehrere Reihen gleichzeitig.

Gleichzeitig kann ein zusätzliches Luftleitelement vorgesehen sein, welches parallel zum Deckel verlaufend, vorzugsweise integraler Bestandteil des Deckels seiend, sowohl zumindest einen Bereich des Steilförderabschnitts als auch zumindest einen Bereich der Übergabestation überdeckend angeordnet ist und in die Übergabestation und/oder auf den Steilabschnitt gerichtete, von einer Gebläseeinheit angesteuerte Öffnungen/Schlitze aufweist, um die Behälterverschlüsse einerseits vom Steilförderabschnitt reihenweise in die Übergabestation zu befördern und andererseits um bereits in der Übergabestation befindliche Behälterverschlüsse in Richtung Übergabepunkt zu befördern.

Insbesondere im Zusammenhang mit der Ausbildung des Übergabepunktes als höchsten Punkt der unteren Begrenzungswand der Übergabestation erweist sich das zusätzliche Luftleitelement als vorteilhaft, da in diesem Fall zusätzliche Luftmengen erforderlich sind, um die Behälterverschlüsse entgegen der Schwerkraft zum höher liegenden Übergabepunkt zu befördern.

Die Fördergeschwindigkeit der mindestens einen Fördereinheit beträgt in einer weiteren bevorzugten Ausführungsvariante der Erfindung ein Vielfaches der Fördergeschwindigkeit des mindestens einen Entnahmeförderers. Da durch den Ausblasvorgang des mindestens einen Entnahmeförderers stets mehrere Behälterverschlüsse in die Übergabestation fördert, ist es erfindungsgemäß vorgesehen, die mindestens eine Fördereinheit mit höherer Fördergeschwindigkeit zu betreiben, um einen Stau der Behälterverschlüsse in der Übergabestation zu vermeiden.

Gemäß einer weiteren bevorzugten Ausführungsvariante der Erfindung ist es vorgesehen, dass die Breite des Trums des Förderbandes der mindestens einen Fördereinheit kleiner oder gleich ist als die größte Breite der Behälterverschlüsse. Um zu verhindern, dass versehentlich mehrere Behälterverschlüsse von der mindestens einen Fördereinheit mitgenommen werden und somit keine Vereinzelung im eigentlichen Sinn stattfindet, ist es erforderlich die durch die magnetische Förderbahn zur Verfügung gestellte Haftkraft entsprechend dosiert einzusetzen. Durch die Begrenzung der maximalen Breite des Trums kann einerseits verhindert werden, dass links und rechts neben einem bereits an der Fördereinheit anhaftenden Behälterverschluss weitere Behälterverschlüsse traubenartig an Fördereinheit kleben, andererseits wird dadurch aber auch die Weiterleitung der Magnetkraft durch einen bereits an der Fördereinheit haftenden Behälterverschluss weitgehend unterbunden.

Gemäß einer weiteren bevorzugten Ausführungsvariante der Erfindung ist es vorgesehen, dass der Steilförderabschnitt des Entnahmeförderers, Boden und Deckel der Übergabestation sowie der erste Förderabschnitt der Fördereinheit senkrecht verlaufend angeordnet sind. Eine solche Anordnung ermöglicht eine in Bezug auf die Aufstandsebene der erfindungsgemäßen Vorrichtung besonders platzsparende Ausführungsvariante.

Erfindungsgemäß kann es auch vorgesehen sein, dass auf der von den Mitnahmelementen des Steilförderabschnitts abgewandten Seite des mindestens einen Entnahmeförderers ein Magnetsystem angeordnet ist, um die Behälterverschlüsse in diesem Bereich stärker an den Entnahmeförderer zu binden und Verklemmungen durch Herunterfallen zu vermeiden.

Als besonders bevorzugte Ausführungsvariante der Erfindung ist es vorgesehen, dass zwei parallel zu einander verlaufende Entnahmeförderer angeordnet sind und die Übergabestation sowie eine die vereinzelten und lageausgerichteten Behälterverschlüsse zur Verschliessmaschine transportierende Fördereinheit zwischen den Entnahmeförderern angeordnet ist, wobei die Übergabestation zwei Beschickungsöffnungen aufweist. Eine solche erfindungsgemäße Vorrichtung hat sich als besonders effizient erwiesen, da die Übergabestation beidseitig beschickt werden kann und die Fördergeschwindigkeiten der Entnahmeförderer sowie der Fördereinheit optimal aufeinander abgestimmt werden können, in dem die Fördergeschwindigkeit der Fördereinheiten langsamer gewählt werden, um das Schöpfen der Behälterverschlüsse aus dem Vorratsbehälter mit optimalen Wirkungsgrad zu ermöglichen und andererseits aber die Fördergeschwindigkeit der Fördereinheit problemlos so gesteigert werden kann, dass die von den Entnahmeförderern in die Übergabestation beförderten Behälterverschlüsse problemlos von der Fördereinheit vereinzelt und lageausgerichtet aus der Übergabestation und weitertransportiert werden können.

In Bezug auf eine Ausführungsvariante mit zwei Entnahmeförderern sieht eine bevorzugte Ausführungsvariante vor, dass die Relativposition der beiden Entnahmeförderer zueinander während des Förderns konstant ist und entweder die Mitnahmeelemente an den einzelnen Gliedern in Bezug auf deren Vertikalabstand zur Aufstandsebene der Vorrichtung stets unterschiedlich positioniert sind oder die beiden Beschickungsöffnungen einen unterschiedlichen Vertikalabstand zur Aufstandsebene der Vorrichtung aufweisen. Dadurch ist gewährleistet, dass die Beschickung der Übergabestation stets zeitversetzt von den beiden Entnahmeförderern befüllt wird.

In diesem Fall sieht eine weitere bevorzugte Ausführungsvariante vor, dass die untere Begrenzungswand der Übergabestation V-förmig ausgebildet ist, wobei jeder Schenkel jeweils den tiefsten Punkt einer Beschickungsöffnung mit dem tiefsten Punkt der Übergabestation in Bezug auf die Aufstandsebene verbindet. Die Behälterverschlüsse können so von beiden Seiten in die Übergabestation fallen und werden automatisch auf die mittig angeordnete Fördereinheit gelenkt.

In einer weiteren bevorzugten Ausführungsvariante der Erfindung ist es vorgesehen, dass zwischen den beiden Entnahmeförderern und in Betriebsstellung der Vorrichtung unterhalb der Übergabestation eine Aufgabeeinheit vorgesehen ist, welche einen vorzugsweise keilförmigen Schüttgutteiler aufweist, der die zu vereinzelnden und lageauszurichtend einer Verschließmaschine zuzuführenden Behälterverschlüsse auf die beiden Entnahmeförderer aufteilt. Die Behälterverschlüsse können dadurch automatisiert der erfindungsgemäßen Vorrichtung zugeführt werden, die Aufteilung auf die beiden Entnahmeförderer erfolgt dann mittels des Schüttgutteilers, der in einer besonders bevorzugten Ausführungsvariante der Erfindung zwischen den Entnahmeförderern beweglich angeordnet ist, um nicht nur aber auch unter dem Strom der von außerhalb der Vorrichtung zugeführten Behälterverschlüsse das Aufteilungsverhältnis der aufgegebenen Behälterverschlüsse auf die beiden Entnahmeförderer beeinflussen zu können.

Gemäß einer weiteren bevorzugten Ausführungsvariante der Erfindung ist es vorgesehen, dass zwischen Fördereinheit und Weiterverarbeitungsmaschine eine Schwerkraftrinne angeordnet ist, welche eine Führungsbahn aufweist, auf welcher die Behälterverschlüsse aufgrund der Schwerkraft in Richtung zur Weiterverarbeitungsmaschine rutschen und die Führungsbahn aus Kunststoff, vorzugsweise Polyethylen ausgebildet ist bzw. mit einem aus Kunststoff, vorzugsweise Polyethylen aufgebauten Belag zumindest im Kontaktbereich mit den Behälterverschlüssen versehen ist. Dadurch werden die Behälterverschlüsse während ihres Falls in Richtung Weiterverarbeitungsmaschine geschont, was insbesondere bei Kronenkorken als Behälterverschlüsse sehr wichtig ist, da diese auf ihrer Sichtfläche keine Verschleißerscheinungen aufweisen dürfen.

Im Anschluss erfolgt nun eine detaillierte Beschreibung der Erfindung anhand eines Ausführungsbeispiels, nämlich einer Vorrichtung zum Vereinzeln und Lageausrichten von Kronenkorken, sowie zum Befördern der vereinzelten und lageausgerichteten Kronenkorken, zu einer Verschliessmaschine.

### KURZE BESCHREIBUNG DER FIGUREN

Dabei zeigt:
- Fig.1: eine Seitenansicht einer erfindungsgemäßen Vorrichtung
- Fig.2: eine Frontansicht einer erfindungsgemäßen Vorrichtung
- Fig.3: eine Schnittansicht durch eine erfindungsgemäße Vorrichtung gemäß Schnittlinie AA aus Fig.1
- Fig.4: eine Schnittansicht durch eine erfindungsgemäße Vorrichtung gemäß Schnittlinie BB aus Fig.2
- Fig.5: eine Schnittansicht durch eine erfindungsgemäße Vorrichtung gemäß Schnittlinie CC aus Fig.2
- Fig.6: eine Detailansicht der Übergabestation
- Fig.7: eine Schnittansicht durch eine erfindungsgemäße Vorrichtung gemäß Schnittlinie DD aus Fig.6
- Fig.8: eine Schnittansicht eines Details des Entnahmeförderers
- Fig.9: eine Schnittansicht durch die Schwerkraftrinne
- Fig.10: eine Detailansicht des verstellbaren Schüttgutteilers
- Fig.11: eine Detailansicht des Deckels der Übergabestation
- Fig.12: eine teilweise geschnittene Detailansicht des Übergangs zwischen erstem und weiterem Förderabschnitt der Fördereinheit
- Fig.13: eine Draufsicht auf eine Erfindungsgemäße Vorrichtung
- Fig.14: einen Schnitt durch die Übergabestation gemäß Schnittlinie EJ aus Fig.3
- Fig.15: eine Frontansicht einer alternativen Ausführungsvariante der erfindungsgemäßen Vorrichtung
- Fig.16: eine Seitenansicht der alternativen Ausführungsvariante der erfindungsgemäßen Vorrichtung
- Fig.17: eine Schnittansicht durch die alternative Ausführungsvariante der erfindungsgemäßen Vorrichtung gemäß Schnittlinie AA aus Fig.16
- Fig.18: eine Schnittansicht durch die alternative Ausführungsvariante der Erfindung gemäß Schnittlinie LL aus Fig.17
- Fig.19: eine Schnittansicht durch die alternative Ausführungsvariante der Erfindung gemäß Schnittlinie KK aus Fig.16
- Fig.20: eine Schnittansicht durch eine alternative Ausführungsvariante der Erfindung gemäß Schnittlinie MM aus Fig.15

### WEGE ZUR AUSFÜHRUNG DER ERFINDUNG

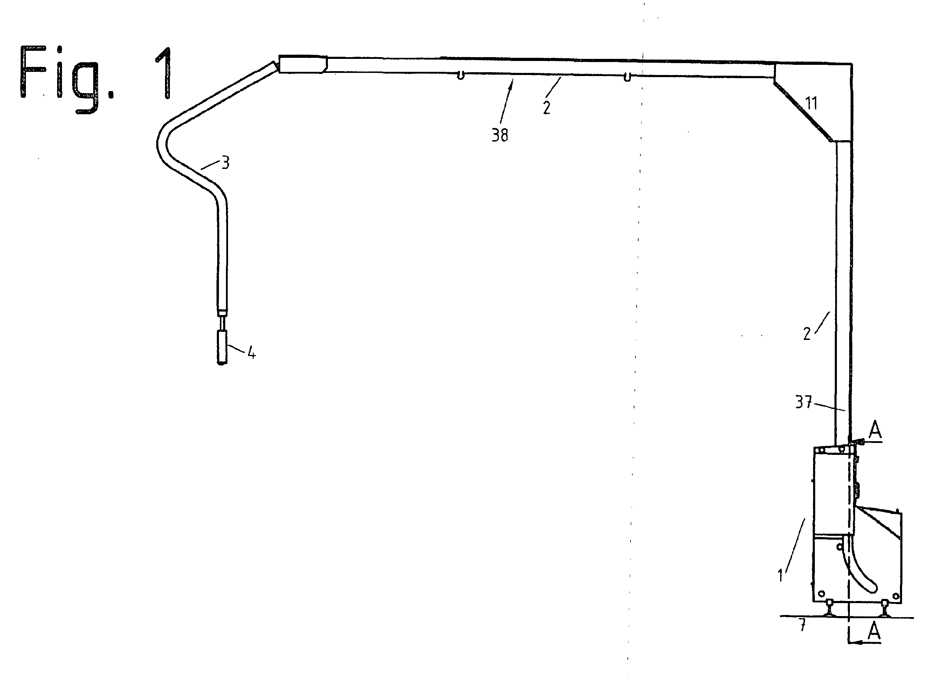

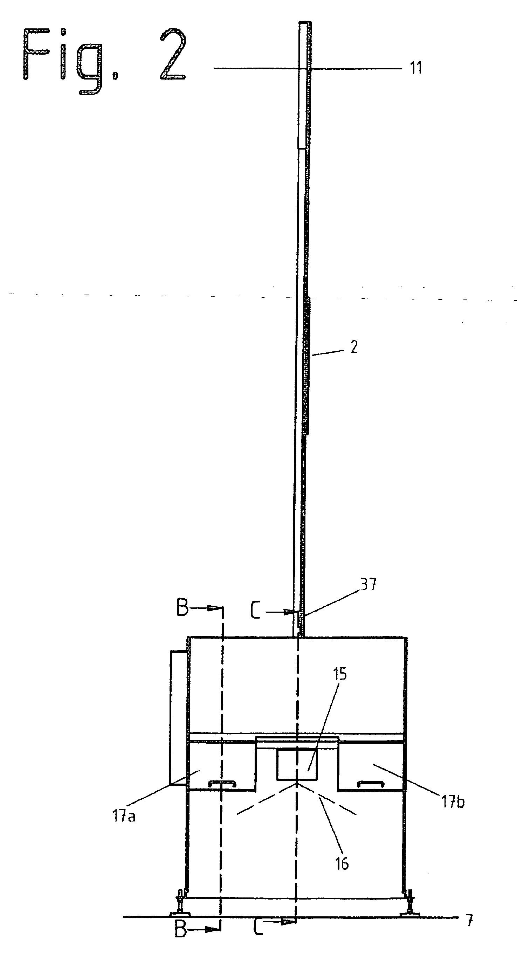

Fig.1 und Fig.2 zeigen jeweils eine Seitenansicht bzw. eine Frontansicht einer erfindungsgemäßen Vorrichtung zum Vereinzeln und Lageausrichten von Kronenkorken sowie zum Befördern der vereinzelten und lageausgerichteten Kronenkorken zu einer (nicht gezeichneten) Verschliessmaschine. Die erfindungsgemäße Vorrichtung umfasst einen Maschinenschrank 1 sowie eine Fördereinheit 2 und eine bewegliche Schwerkraftrinne 3, die mit einem Endstück 4 versehen ist, das mit der (nicht gezeichneten) Verschliessmaschine koppelbar ist.

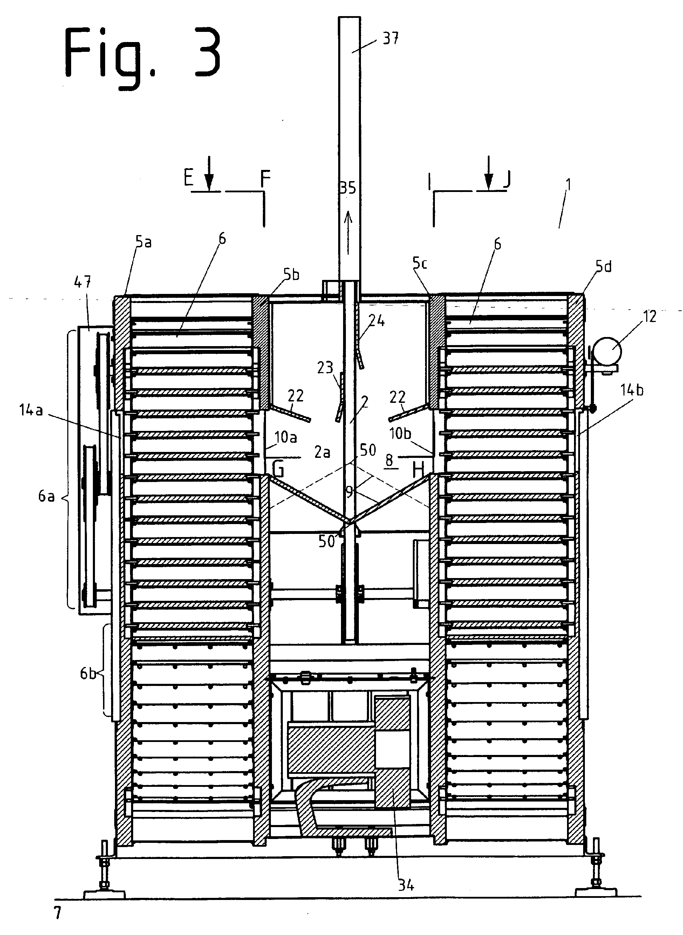

Fig.3, Fig.4 und Fig.5 zeigen eine Schnittansicht durch eine erfindungsgemäße Vorrichtung gemäß Schnittlinie AA aus Fig.1 bzw. BB aus Fig.2 bzw. CC aus Fig.2, so dass der Maschinenkasten 1 geschnitten dargestellt wird. Dieser weist einen einfachen Grundaufbau aus vier Kunststoffplatten 5a,5b,5c,5d auf, die über nicht gezeichnete Spannschrauben verbunden sind und das Gerüst für sämtliche darin befindlichen Bauteile bilden. In die Kunststoffplatten 5a,5b,5c,5d sind außerdem sämtliche erforderlichen Führungen, Luftführkanäle, Lagersitze, Bohrungen, etc. eingearbeitet.

Zwischen den Kunststoffplatten 5a und 5b sowie 5c und 5d ist jeweils ein Entnahmeförderer 6 in Form eines Gliederbandförderers angeordnet, der einen Steilförderabschnitt 6a und einen Flachförderabschnitt 6b aufweist. Der Steilförderabschnitt 6a ist dabei in einem Winkel > 30°, vorzugsweise > 80° zur Aufstandsebene 7 geneigt, in Fig.3 also in die Zeichenebene hinein geneigt bzw. parallel zur Zeichenebene verlaufend angeordnet. Der Winkel zwischen Flachförderabschnitt 6b und Aufstandsebene 7 ist <10° gewählt. Der Flachförderabschnitt 6b kann auch parallel zur Aufstandsebene, also horizontal verlaufen.

Für den Fachmann offensichtlich ist, dass die Anordnung von zwei Entnahmeförderern rein beispielhaft ist und eine die Vorteile der Erfindung aufweisende Vorrichtung zum Vereinzeln und Lageausrichtung von Behälterverschlüssen auch nur einen Entnahmeförderer, bei sonst im wesentlichen gleichen Aufbau, wie später noch beschrieben, aufweisen kann.

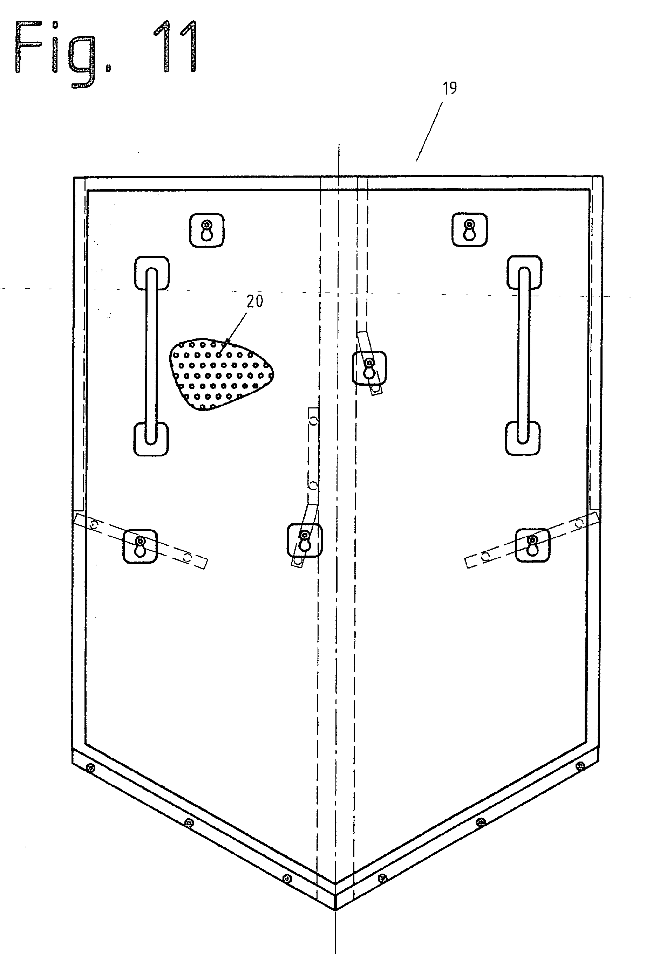

Mittig zwischen den beiden Entnahmeförderern und zwischen den Kunststoffplatten 5b und 5c ist eine kammerartige Übergabestation 8 angeordnet, die einerseits von einem parallel zur Zeichenebene verlaufenden Boden 18 und einem parallel zu diesem Boden 18 verlaufenden, Abluftöffnungen 20 (siehe Fig.11) aufweisenden Deckel 19 begrenzt ist und andererseits von einer unteren Begrenzungswand 9 in Schwerkraftrichtung begrenzt wird und über Beschickungsöffnungen 10a,10b in den Kunststoffplatten 5b und 5c in Richtung der Entnahmeförderer 6 hin offen ist.

Ebenfalls mittig zwischen den Entnahmeförderern 6 ist eine Fördereinheit 2 angeordnet, die durch die Übergabestation 8 verläuft und in einem Teilabschnitt 2a einen Abschnitt des Bodens 18 der Übergabestation 8 bildet.

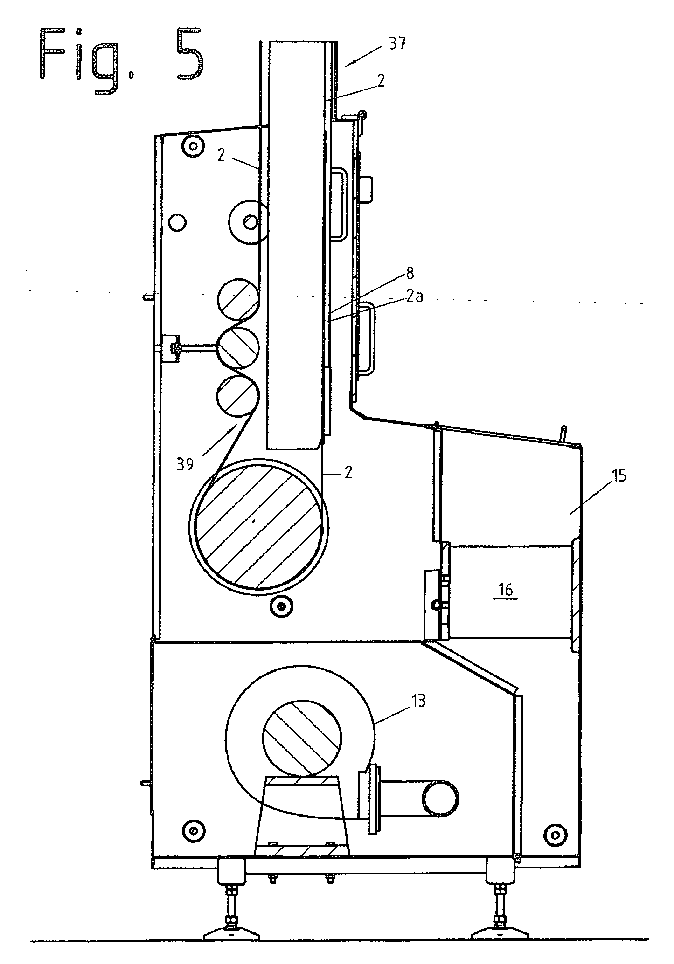

Ebenfalls ersichtlich in Fig.3 ist eine Antriebsvorrichtung 12 samt Übersetzungsgetriebe 47 für die beweglichen Teile der erfindungsgemäßen Vorrichtung sowie Ausblasöffnungen 14a,14b in den Kunststoffplatten 5a bzw. 5d, die über eine Gebläseeinheit 13 (siehe Fig.5) mit Luft versorgt werden und diese quer zur Förderrichtung der Entnahmeförderer 6 auf dessen Glieder 29 leitet. Die Luftführkanäle sind dabei in den Kunststoffplatten 5a,5d eingearbeitet.

Im Ansaugweg der Gebläseeinheit 13 ist ein Filterpaket 34, vorzugsweise ein Hochoberflächenfilter für Sterilluft, angeordnet. Ein Differenzdruckmanometer misst den Druckunterschied vor und nach dem Filter und bestimmt so den Verschmutzungsgrad des Filters.

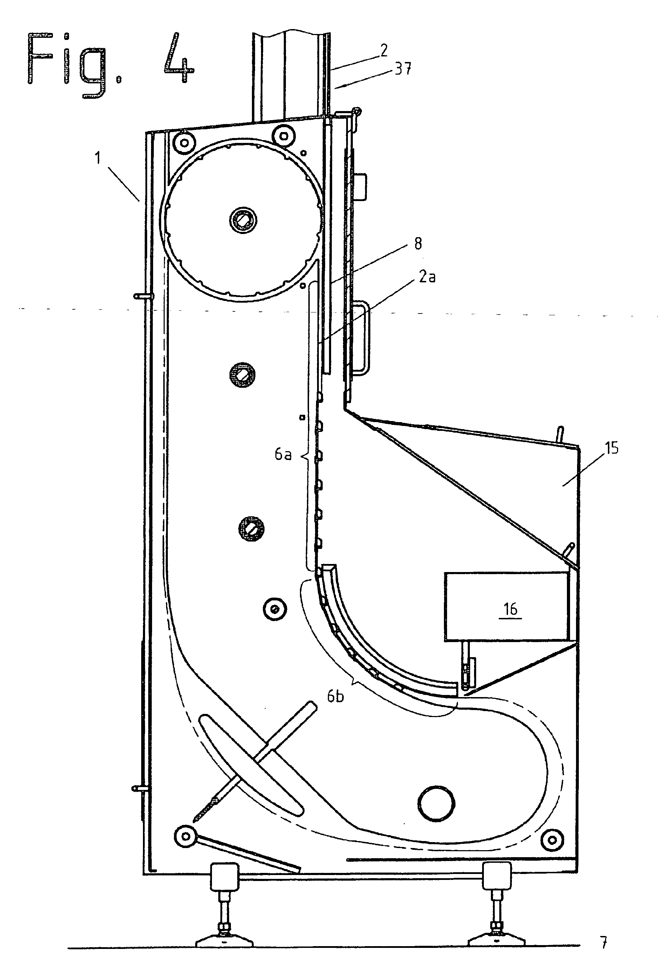

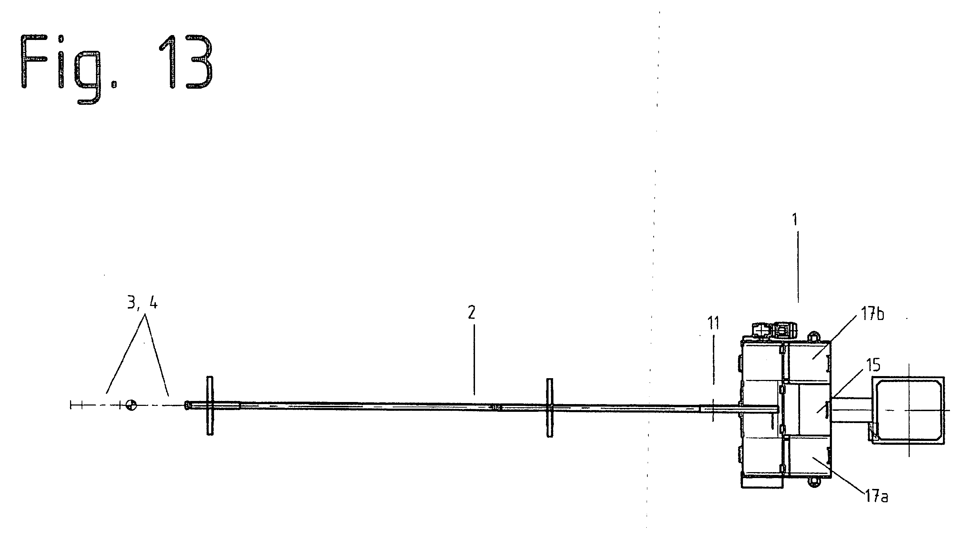

Fig.4 und Fig.5 zeigen insbesondere auch eine Aufgabeeinheit 15, in welchem ein Schüttgutteiler 16 angeordnet ist, der die vorzugsweise automatisiert heranbeförderten Kronenkorken auf links und rechts neben dem Schüttgutteiler 16 angeordnete Vorratsbehälter 17a,17b (siehe auch Fig.13) aufteilt. Der Schüttgutteiler 16 ist in seiner Halterung 27 nach links oder rechts näher zu dem einen oder anderen Vorratsbehälter 17a,17b mittels einer Verstellvorrichtung 28, beispielweise einem Stellmotor oder einem Pneumatik- oder Hydraulikzylinder, verschiebbar angeordnet, um das Aufteilungsverhältnis der über die Aufgabeeinheit 15 aufgegebenen Kronenkorken 21 auf die beiden Vorratsbehälter 17a,17b und damit auf die beiden Entnahmeförderer 6 beeinflussen zu können.

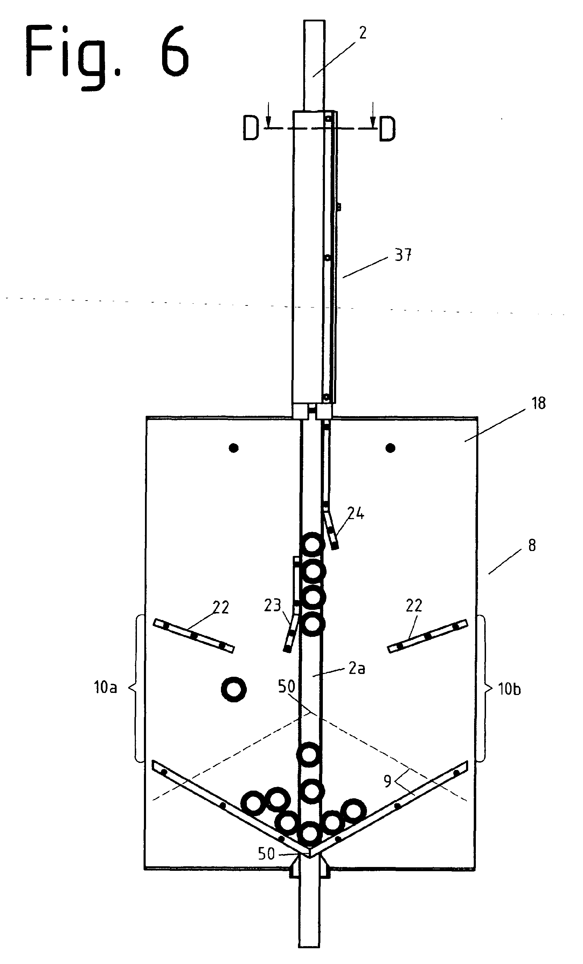

Fig.6 zeigt eine Detailansicht einer Übergabestation 8 ohne Deckel 19, der aus Übersichtlichkeitsgründen weggelassen wurde und dadurch den Blick auf den Boden 18 der Übergabestation freigibt, sowie eines ersten Förderabschnitts 37 der Fördereinheit 2. Mittig zwischen den Beschickungsöffnungen 10a,10b kann man den Teilabschnitt 2a der Fördereinheit 2 erkennen, der im Boden 18 der Übergabestation 8 eingelassen ist und somit einen Abschnitt des Bodens 18 bildet.

Die Kronenkorken 21 sind schematisch dargestellt, wobei einige bereits von der Fördereinheit 2a erfasst wurden und nach oben transportiert wurden, andere wiederum sich noch in einer von der V-förmigen unteren Begrenzungswand 9 gebildeten Mulde, insbesondere am Übergabepunkt 50 sammeln.

Während die in Fig.6 mit festen Linien dargestellte Ausführungsvariante der unteren Begrenzungswand 9 mit Übergabepunkt 50 als tiefster Punkt der unteren Begrenzungswand 9 eine besondere Positioniergenauigkeit der Kronenkorken 21 über der Fördereinheit 2 bzw. deren Teilabschnitt 2a ermöglicht, erleichtert die ebenfalls in Fig.6 jedoch mittels strichlierter Linienführung dargestellte Ausführungsvariante der unteren Begrenzungswand 9 mit Übergabepunkt 50 als höchster Punkt der unteren Begrenzungswand 9 den Abtransport eines auf dem Teilabschnitt 2a liegenden Kronenkorken 21, da kein anderer Kronenkorken 21 von oben auf den gerade abzutransportierenden Kronenkorken 21 drückt.

Fig.6 zeigt weiters zwei Prallplatten 22, deren Funktion an späterer Stelle noch erläutert werden wird, sowie zwei Führungselemente 23,24, die etwas versetzt von der Fördereinheit aufgenommene Kronenkorken 21 auf der Fördereinheit 21 zentrieren.

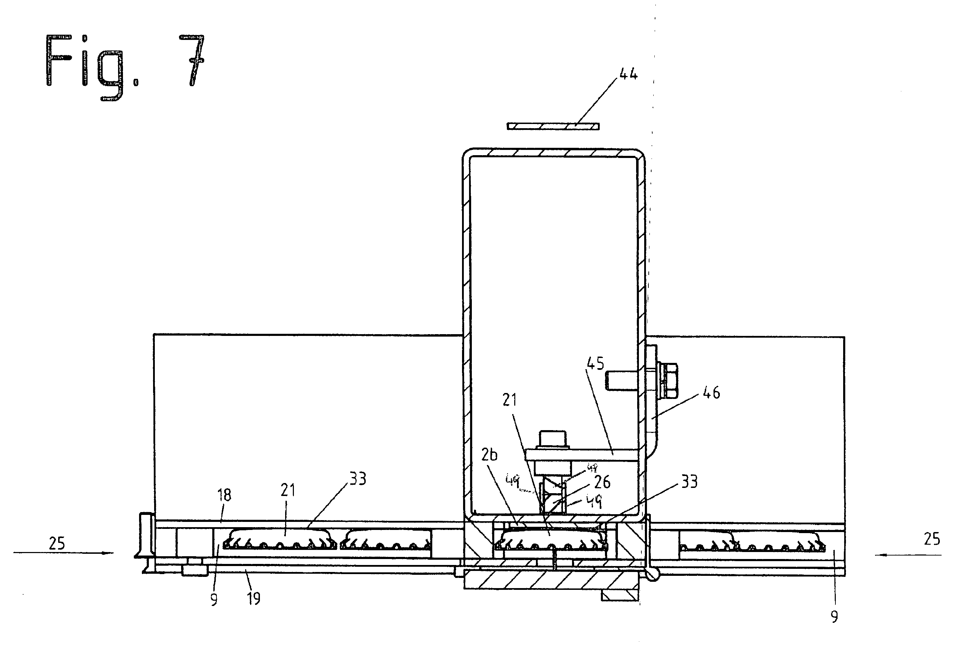

Fig.7 ist eine Schnittansicht durch eine erfindungsgemäße Vorrichtung gemäß Schnittlinie DD aus Fig.6 und zeigt eine Sicht von oben in die Übergabestation 8, also einen Blick auf die untere Begrenzungswand 9 der Übergabestation 8.

Sehr gut kann man in dieser Ansicht erkennen, dass der Abstand zwischen Boden 18 und Deckel 19 so gewählt ist, dass die Kronenkorken 21 ihre Lage mit Bezug auf eine Referenzfläche 33 nicht mehr ändern können, dh. mit anderen Worten, dass sie jene Lage, die sie beim Eintritt in die Übergabestation 8 in Richtung der Pfeile 25 aufweisen auch in der Übergabestation 8 beibehalten und lediglich über ihren Umfang abrollen können.

Fig.7 zeigt weiters das Trum 2b der Fördereinheit 2 sowie deren rücklaufendes Trum 44, die beide auf einem Formrohr 48 als Förderbahn, vorzugsweise aus Edelstahl, laufen. Im Inneren des Formrohres 48 ist ein Permanent- oder Elektromagnet 26 angeordnet, der im wesentlichen stabförmig ausgebildet ist, mit dessen Längsachse parallel zum Trum 2b verlaufend. Mehrere solche Magneten 26 sind hintereinander entlang des zu magnetisierenden Abschnitts der Fördereinheit 2, insbesondere des ersten Förderabschnitts 37 der Fördereinheit 2 angeordnet. Der Magnet 26 ist dabei von Weicheisenelementen 49 umgeben, die U-förmig um den Magneten 26 angeordnet sind, um das magnetische Feld in Richtung des Trums 2b zu lenken. Die seitlich des Magneten 26 angeordneten Weicheisenelemente sind dabei dünnwandig ausgebildet, das gegenüber dem Trum 2b angeordnete Weicheisenelement dickwandig, um ein schmales, auf das Trum 2b fokussiertes parallel dazu verlaufendes magnetisches Feld zu erzeugen.

Magnet 26 und Weicheisenelemente 49 sind dabei von einem Winkelhalter 45 gehalten, der mit einem Langloch 46 am Formrohr befestigt ist. Über das Langloch kann der Abstand des Magneten 26 zum oberen Trum und damit die Wirkung des magnetischen Felds auf die am Trum 2b gehaltenen Kronenkorken 21 eingestellt werden.

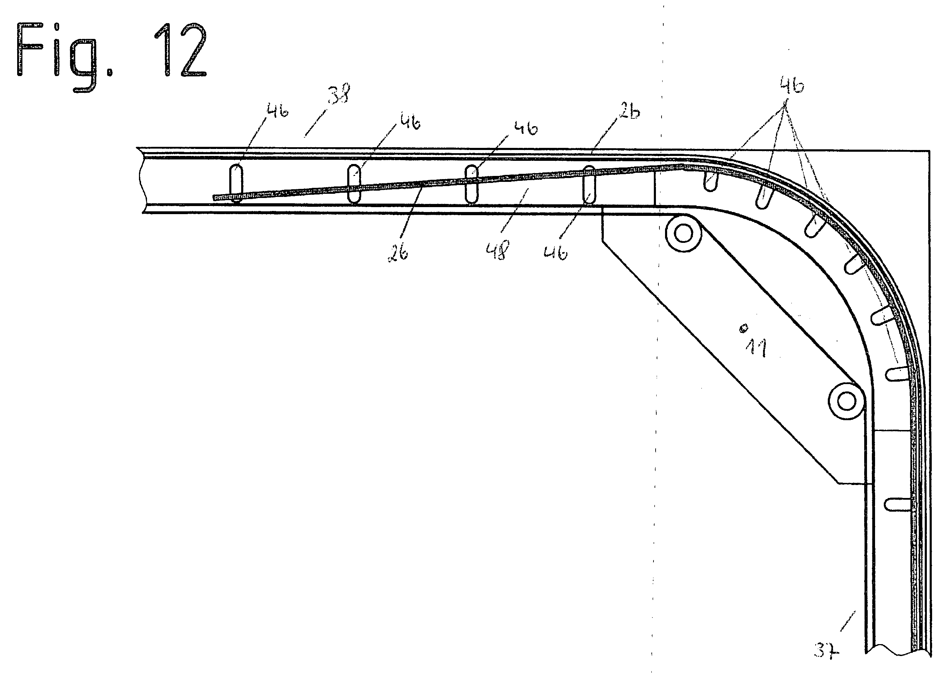

Fig.12 zeigt eine eine teilweise geschnittene Detailansicht des Übergangs zwischen erstem 37 und weiterem 38 Förderabschnitt der Fördereinheit. Die Magnete 26 sind dabei so angeordnet, dass sich deren Abstand zum Trum 2b der Fördereinheit 2m in Förderrichtung gesehen nach dem Übergang vergrößert, um die Wirkung des magnetischen Felds auf das Trum 2b und somit auf die darauf beförderten Kronenkorken 21 verlaufend zu verringern.

### FUNKTIONSWEISE DER ERFINDUNG

Im Anschluss erfolgt nun eine detaillierte Beschreibung der Funktionsweise der erfindungsgemäßen Vorrichtung.

Kronenkorken 21 werden als Schüttgut über die Aufgabeeinheit 15 in die Vorratsbehälter 17a,17b aufgegeben. Über den verstellbaren Schüttgutteiler 16 kann die Aufteilung des Schüttguts auf die einzelnen Vorratsbehälter 17a,17b gesteuert werden.

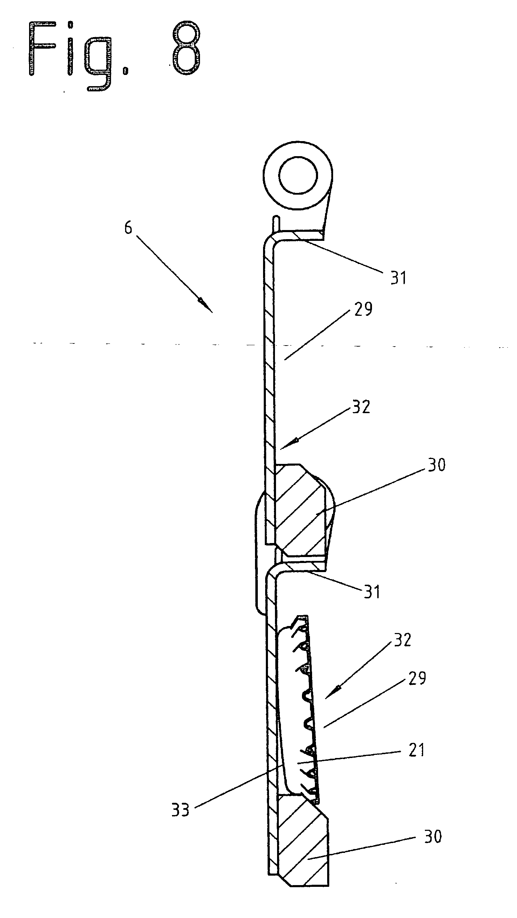

In weiterer Folge werden die Kronenkorken 21 von den Entnahmeförderern 6 aus den Vorratsbehältern 17a,17b geschöpft. Zu diesem Zweck tauchen die Entnahmeförderer 6 mit ihren Flachförderabschnitten 6b in die in den jeweiligen Vorratsbehältern 17a,17b gespeicherten Mengen aus Kronenkorken 21 ein. Die Kronenkorken 21 werden dabei von mehreren an den Entnahmeförderern 6, die als Gliederbandförderer ausgebildet sind, angeordneten, beispielsweise verschraubten, Mitnahmeelementen 30 erfasst und mitgenommen. Die einzelnen Glieder 29 der Entnahmeförderer 6 weisen zu diesem Zweck aber auch aus Stabilitätsgründen einen aufgekanteten Endbereich 31 auf. Der andere Endbereich wird jeweils von einem Mitnahmeelement 30 gebildet. Mitnahmeelement 30 und aufgekanteter Endbereich 31 bilden eine Aufnahme 32 für die Kronenkorken 21 (siehe Fig.8), wobei lediglich Kronenkorken wie in Fig.8 gezeichnet, also mit ihrer Sichtfläche 33 in Richtung der Aufnahme 32 weisend, über den Steilförderabschnitt 6a befördert werden können, da die Schwerpunktslage solcherart mitgenommener Kronenkorken 21 das Herauskippen derselben aus der Aufnahme 32 verhindert. Für den Fall, dass Kronenkorken 21 in entgegengesetzter Orientierung als dies in Fig.8 dargestellt ist, also mit der Sichtfläche 33 von der Aufnahme 32 wegweisend, in der Aufnahme 32 zu liegen kommen, werden aufgrund der Schwerpunktslage und der Auslegung der Geometrie der Mitnahmeelemente 30 solcherart mitgenommene Kronenkorken 21 von den Entnahmeförderern 6 lediglich bis zum Steilförderabschnitt 6b gefördert, wo sie dann aus der Aufnahme 32 herausrutschen und wieder retour in den jeweiligen Vorratsbehälter 17a,17b fallen, aus welchem sie entnommen wurde, um vom jeweiligen Entnahmeförderer 6 erneut geschöpft zu werden.

In den Entnahmeförderern 6 werden die Kronenkorken 21 dann mit dieser Vororientierung (Referenzfläche 33 in Richtung der Aufnahme 32 weisend) den Steilförderabschnitt 6a entlangbefördert bis auf die Höhe der Beschickungsöffnungen 10a,10b. Jeweils auf der gegenüberliegenden Seite der Beschickungsöffnungen 10a,10b in Bezug auf den jeweiligen Steilförderabschnitt 6a sind von einer Gebläseeinheit 13 angesteuerte Ausblasöffnungen 14a,14b angeordnet, wodurch in den Kunststoffplatten 5a bzw. 5d Luft quer zur Förderrichtung der Entnahmeförderer 6 auf dessen Glieder einblasbar ist, so dass die in den einzelnen Aufnahmen 32 der Glieder 29 vororientiert gehaltenen Kronenkorken 21 in die Übergabestation 8 ausgeblasen werden. Das Ausblasen kann dabei entweder reihenweise erfolgen, oder aber können mehrere Reihen gemeinsam ausgeblasen werden, abhängig von der Anordnung der Öffnungen 14a,14b. Die eingeblasene Luft kann über Öffnungen 20 im Deckel 19 der Übergabestation 8 wieder entweichen.

Den Gebläseeinheiten vorgeschalten ist ein Filterpaket 34, beispielsweise ein Hochoberflächenfilter, um die zum Ausblasen der Kronenkorken 21 verwendete Luft möglichst steril zu halten und das Anhaften von Staub oder anderen Störelementen, welche die Basis für spätere Schimmelbildung an den Kronenkorken 21 bilden könnte, verlässlich auszuschließen.

In weiterer Folge, nach dem Ausblasen der Kronenkorken 21 aus den Aufnahmen 32 der Entnahmeförderer 6 fallen die Kronenkorken 21 über die Beschickungsöffnungen 10a,10b in die Übergabestation 8, indem sie entlang der unteren Begrenzungswand 9 der Übergabestation 8 bzw. entlang darauf bereits befindlichen anderen Kronenkorken 21 (siehe auch Fig.6) dem tiefsten Punkt der Übergabestation 8 zustreben. Der tiefste Punkt der Übergabestation 8 ist vorzugsweise direkt über dem Teilabschnitt 2a der Fördereinheit 2 angeordnet bzw. genauer gesagt direkt über dem Trum 2b des Teilabschnittes 2a der Fördereinheit 2. Das Trum 2b ist zu diesem Zweck in den Boden 18 der Übergabestation 8 eingelassen bzw. verläuft in einer Nut desselben.

Die Beschickung der Übergabestation 8 erfolgt von beiden Entnahmeförderern 6 aus. Um zu verhindern, dass die Übergabestation gleichzeitig von beiden Entnahmeförderern 6 beschickt wird und sich möglicherweise gegenseitig stören, ist es vorgesehen, dass die Relativposition der beiden Entnahmeförderer 6 zueinander während des Förderns konstant ist und entweder die Mitnahmeelemente 30 an den einzelnen Gliedern 29 in Bezug auf deren Vertikalabstand zur Aufstandsebene 7 der Vorrichtung stets unterschiedlich positioniert sind oder die beiden Beschickungsöffnungen 10a,10b einen unterschiedlichen Vertikalabstand zur Aufstandsebene 7 der Vorrichtung aufweisen. Dadurch ist gewährleistet, dass die beiden Entnahmeförderer 6 die Übergabestation 8 nie gleichzeitig beschicken, sondern stets etwas zeitversetzt, wodurch eine gegenseitige Behinderung des Beschickungsvorganges vermieden wird.

Die Übergabestation 8 weist des weiteren Prallplatten 22 auf, die beim Beschicken der Übergabestation 8 verhindern sollen, dass Kronenkorken 21 zu weit von der unteren Begrenzungswand 9 der Übergabestation 8 abgelenkt werden.

Der Abstand zwischen Boden 18 und Deckel 19 der Übergabestation ist jedenfalls kleiner als der Durchmesser der Kronenkorken 21 und in der Praxis etwas größer als deren Dicke, so dass eine Lageveränderung der Kronenkorken 21 bezogen auf deren Orientierung der Referenzfläche 33 nicht möglich ist. Bei der Referenzfläche 33 handelt es sich um die Sichtfläche 33 der Kronenkorken 21, die besonders schonend gehandhabt werden muss, da diese in der Regel mit einem Logo oder einer Aufschrift versehen ist und diese während der erfindungsgemäßen Manipulation nicht zerkratzt oder gar zerstört werden darf.

Die in der Übergabestation 8 befindlichen Kronenkorken 21 nehmen im Lauf ihrer Verweildauer in der Übergabestation 8 auch eine Position über oder vor (je nach Betrachtungsweise) dem Teilabschnitt 2b der Fördereinheit 2 ein, wo sie am Trum 2b aufgrund dessen Magnetisierung anhaften und in Förderrichtung 35 der Fördereinheit 2 weiterbefördert werden. Zum Zentrieren der Kronenkorken 21 auf dem Trum 2b sind in der Übergabestation 8 auch Leitbleche 23,24 vorgesehen.

Erfindungsgemäß ist ein unmittelbar nach der Übergabestation 8 angeordneter erster, von der Übergabestation 8 unabhängiger Förderabschnitt 37 der die vereinzelten und lageausgerichteten Behälterverschlüsse befördernden mindestens einen Fördereinheit 2 vorgesehen, der eine von der Aufstandsebene 7 der Vorrichtung wegweisende Förderrichtungskomponente aufweist. Mit anderen Worten werden die Kronenkorken 21 nach deren Vereinzelung und Lageorientierung in Bezug auf die Aufstandsebene 7 nach oben von der Übergabestation 8 wegbefördert, wodurch diese auch weit unten, in Griffweite für Bedienpersonal angeordnet werden kann. Im vorliegenden Ausführungsbeispiel verläuft der Förderabschnitt 37 vertikal, allerdings sind auch geneigte Verläufe des Förderabschnitts 37 denkbar, solange sie eine von der Aufstandsebene 7 wegweisende Förderrichtungskomponente aufweisen. Die erfindungsgemäße Vorrichtung benötigt durch das Wegfördern der Kronenkorken 21 nach oben von der Übergabestation 8 eine geringe Grundfläche und ermöglicht das rasche Hochfördern der bereits vereinzelten und lageausgerichteten Kronenkorken 21 auf eine Höhe, wo der Weitertransport horizontal erfolgen kann.

Unter dem Begriff "von der Übergabestation unabhängig" wird in diesem Zusammenhang verstanden, dass die Übergabe an die Fördereinheit 2 in diesem Förderabschnitt 37 bereits vollkommen beendet sein muss, dh. dass die Kronenkorken 21 in diesem unmittelbar an die Übergabestation 8 grenzenden ersten Förderabschnitt 37 der Fördereinheit 2 bereits vollkommen vereinzelt, lageorientiert und ausgerichtet sind, wobei eine Zentrierung der Kronenkorken 21 auf dem Trum 2b auch in einem späteren Abschnitt erfolgen kann, da eine Zentrierung an der prinzipiellen Vereinzelung bzw. Lageausrichtung nichts mehr ändert.

Die Förderung der Kronenkorken in diesem Förderabschnitt 37 beruht ausschließlich auf der Förderbewegung der Fördereinheit 2.

Die Fördereinheit 2 selbst hat nachfolgend dem ersten Förderabschnitt 37 weitere Förderabschnitte bzw. kann auch mehrteilig dh. aus mehreren anderen Fördereinheiten aufgebaut sein, je nach Distanz zur Verschliessmaschine. Im vorliegenden Fall geht der Förderabschnitt 37 in einer definierten Höhe, in welcher ein horizontaler Weitertransport der Kronenkorken 21 möglich ist, ohne am Boden stehende Anlagen zu stören bzw. aus welcher die Kronenkorken 21 optimal der Verschliessmaschine zugeführt werden können, in einen weiteren, horizontal verlaufenden Förderabschnitt 38 über. Die Krümmungsachse 11 des Übergangs zwischen den beiden Förderabschnitten 37,38 verläuft parallel zur Oberfläche des Trums 2b bzw. zur Referenzoberfläche 33 der auf der Fördereinheit transportierten Kronenkorken 21. Der Übergang erfolgt ohne Umlenkrollen und mit großem Radius, vorzugsweise > 200mm, besonders bevorzugt zwischen 300mm und 600mm. Die Spannvorrichtung 39 für die Fördereinheit 2 ist auf Höhe der Übergabestation 8 angeordnet.

Im Förderabschnitt 38 vergrößert sich der Abstand zwischen Trum 2b und den Magneten 26 der Förderbahn 48 beginnend mit dem Übergang vom Förderabschnitt 37, so dass über einen Großteil des Förderabschnittes 38 keine Magnetkraft wirkt. Das sanfte Verringern der Magnetkraft verhindert, dass sich zu Beginn des Förderabschnitts 38 ein Stau an Kronenkorken 21 bildet, wie es der Fall wäre, wenn die Magnetkraft plötzlich wegbliebe und aus dem Förderabschnitt 37 aber noch von Magnetkraft gehaltene Kronenkorken 21 nachgeschoben werden.

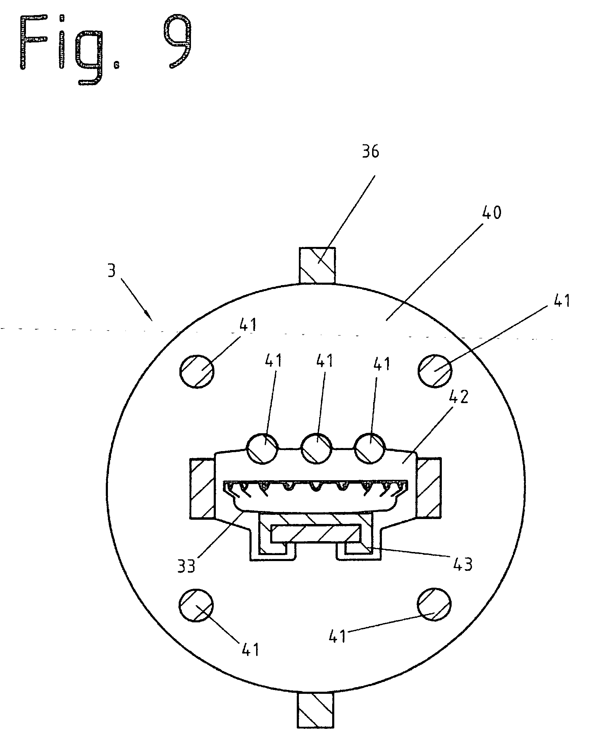

Der horizontal verlaufende Förderabschnitt 38 weist eine Länge auf, die in der Regel bis oberhalb der hier nicht gezeichneten Verschliessmaschine reicht. Der Förderabschnitt 38 geht dort in eine Schwerkraftrinne 3 über, die aus mehreren Flanschen 40 aufgebaut ist, die allesamt durch die Flansche 40 durchdringende Stäbe 41 miteinander verbunden sind (siehe Fig.9). Die Flansche 40 sind zusätzlich über außen an denselben angeordneten, die Flansche 40 untereinander verbindende Versteifungsprofile 36 miteinander verbunden, um die Schwerkraftrinne 3 zusätzlich zu versteifen und stabilisieren.

Jeder Flansch 40 ist mit einer Führungsausnehmung 42 versehen, innerhalb welcher eine Führungsbahn 43 für aufgrund der Schwerkraft nach unten beförderte Kronenkorken 21 gehalten ist. Die Führungsbahn 43 ist zur Schonung der Referenzoberfläche 33 der Kronenkorken 21 aus einem gute Gleiteigenschaften aufweisenden Kunststoff gebildet, beispielsweise Polyethylen (PE) oder Teflon (PTFE).

### ALTERNATIVE AUSFÜHRUNGSVARIANTE DER ERFINDUNG

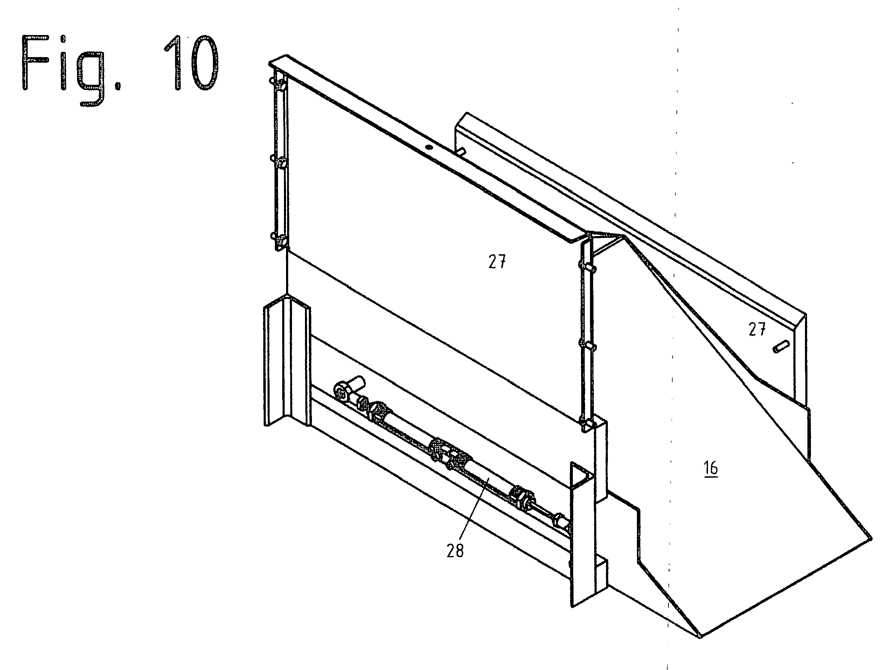

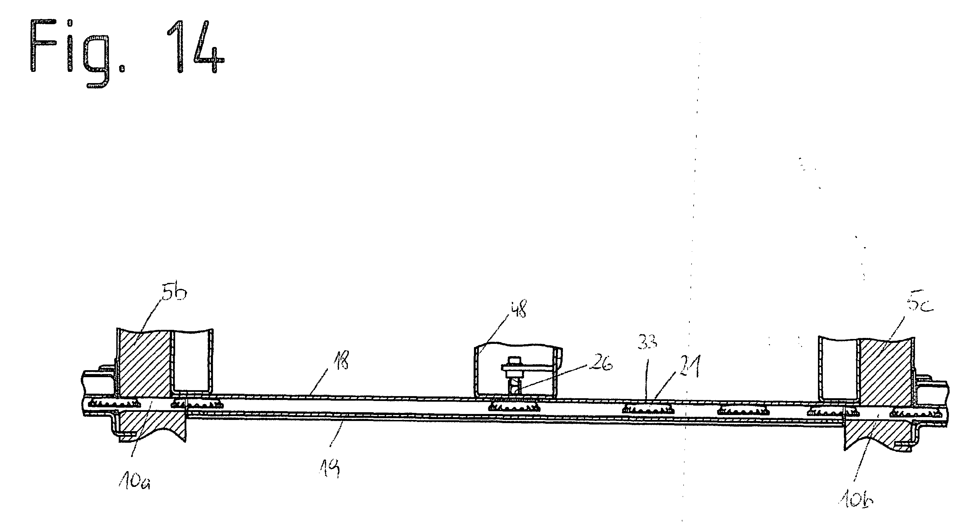

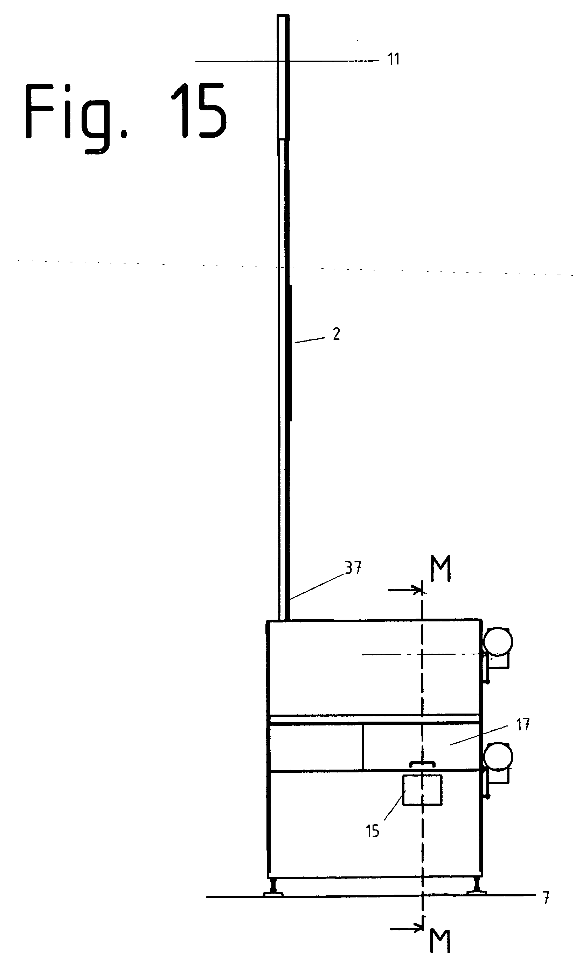

Die Fig. 15 bis 20 zeigen eine alternative Ausführungsvariante der Erfindung. Diese alternative Ausführungsvariante wird anhand einer Vorrichtung zum Vereinzeln und Lageausrichten von metallischen Behälterverschlüssen mit nur einem Entnahmeförderer 6 gezeigt. Für den Fachmann ergibt sich jedoch, dass selbstverständlich auch bei dieser dieser Ausführungsvariante ein zweiter Entnahmeförderer im Sinne des Ausführungsbeispiels nach Fig.1 bis 14 vorgesehen werden kann.

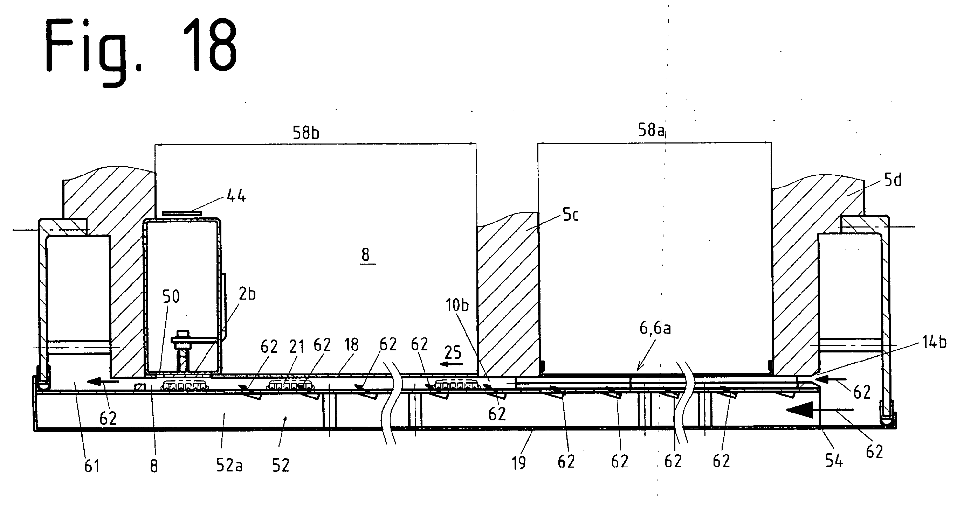

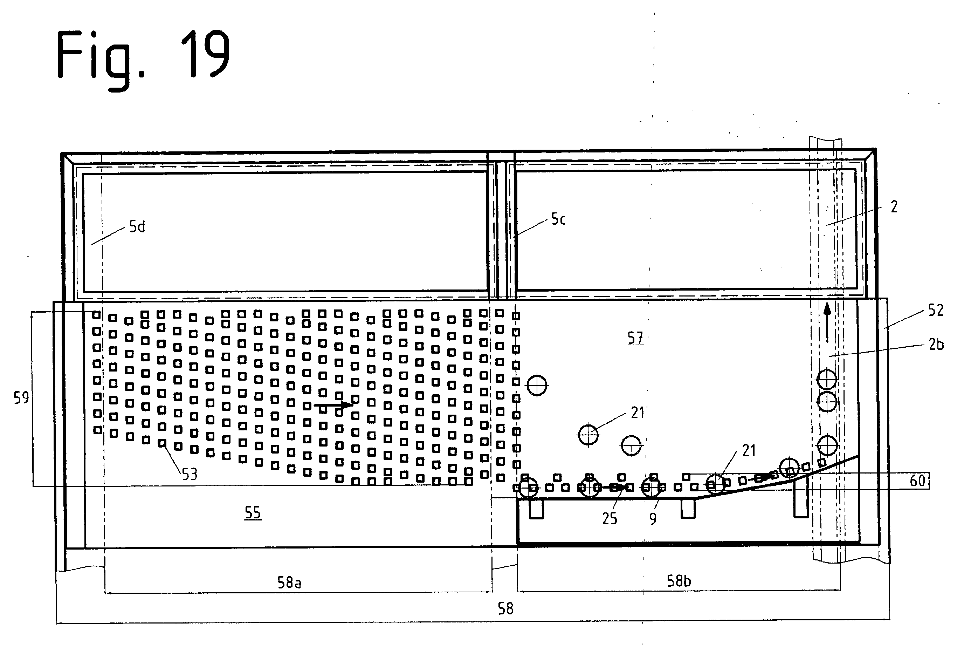

Diese alternative Ausführungsvariante unterscheidet sich von der in den Fig. 1 bis 14 beschriebenen Ausführungsvariante im wesentlichen dadurch, dass gegenüber dem Boden 18 der Übergabestation 8 sowie gegenüber dem Steilförderabschnitt 6a des Entnahmeförderers 6 im wesentlichen parallel dazu verlaufend und daher eine Art Oberführung bildend ein zusätzliches Luftleitelement 52, wie in Fig.18 und 19 dargestellt, vorgesehen ist. Das Luftleitelement 52 übernimmt somit im Bereich der Übergabestation 8 die Funktionalität des in Fig.7 der weiter oben beschriebenen Ausführungsvariante der Erfindung beschriebenen Deckels 19 der Übergabestation 8, dh., dass der Abstand zwischen Boden 18 und Luftleitelement 52 so gewählt ist, dass die Kronenkorken 21 ihre Lage mit Bezug auf eine Referenzfläche 33 nicht mehr ändern können, dh. mit anderen Worten, dass sie jene Lage, die sie beim Eintritt in die Übergabestation 8 in Richtung des Pfeiles 25 aufweisen auch in der Übergabestation 8 beibehalten und lediglich über ihren Umfang abrollen können.

Das Luftleitelement 52 kann dabei integraler Bestandteil des Deckels 19 sein oder aber als separater Teil verbaut werden, das unmittelbar an den Deckel 19 angrenzt. Der Deckel 19 benötigt in diesem Fall keine Abluftöffnungen 20.

Das zusätzliche Luftleitelement 52 umfasst einen mit Überdruck beaufschlagten Hohlraum 52a mit einer seitlichen Öffnung 54, über welche das Luftleitelement 52 über den die Ausblasöffnungen 14b versorgenden, in der Kunststoffplatte 5d eingearbeiteten Luftführkanal 56 mit Luft als Ausblasmedium versorgt wird.

Das Luftleitelement 52 weist außerdem kiemenartige Öffnungen/Schlitze 53 auf, die schräg in das Innere der Übergabestation 8 gerichtet sind, um die Kronenkorken 21 in Richtung Trum 2b der Fördereinheit 2 (Richtung des Pfeiles 25 bzw. Übergabepunkt 50) zu befördern, das einen Teil der Rückwand 18 der Übergabestation 8 bildet.

Somit werden die Kronenkorken 21 nicht nur über die Ausblasöffnungen 14b aus den Gliedern des Entnahmeförderers 6 ausgeblasen, sondern erfahren einen zusätzlichen Ausblasimpuls durch die kiemenartigen Öffnungen/Schlitze 53 des Luftleitelementes 52 sowohl im Bereich des Entnahmeförderers als auch im Bereich der Übergabestation.

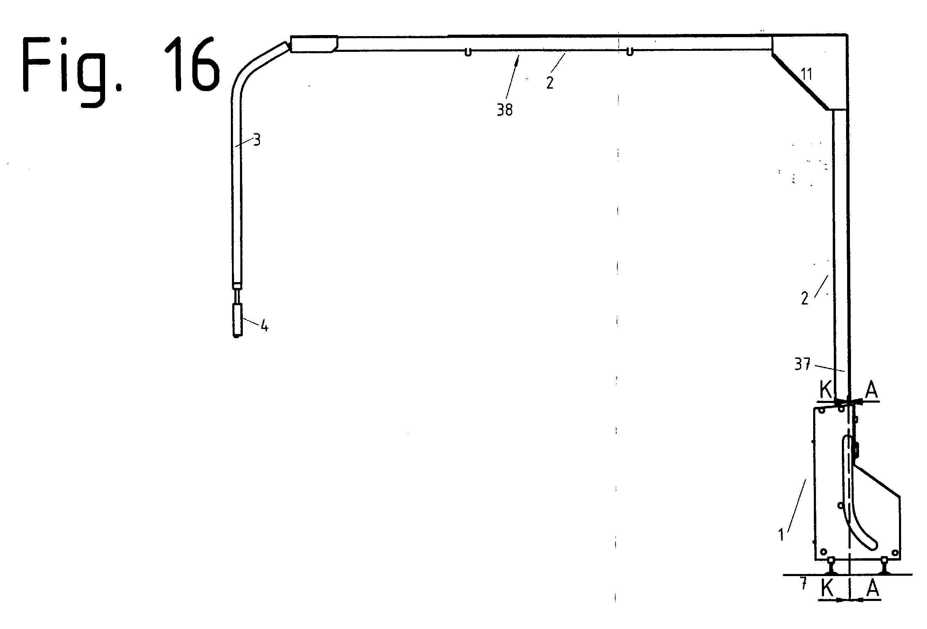

Dieser Umstand ist auch sehr gut aus Fig.19 ersichtlich, die eine Schnittansicht gemäß der Linie KK aus Fig.16 darstellt. Wie man hier noch zusätzlich gut erkennen kann, ist die Verteilung der kiemenartigen Öffnungen/Schlitze 53 über die Breite 58 des Luftleitelements 52 unterschiedlich.

In einem ersten Abschnitt 55 des Luftleitelementes 52, der dem Steilförderabschnitt 6a des Entnahmeförderers 6 gegenüberliegt, erfolgt die Anordnung der kiemenartigen Öffnungen/Schlitze 53 im wesentlichen flächig, so dass diese einerseits entlang der gesamten Breite 58a des Steilförderabschnitts 6a des Entnahmeförderers 6 verteilt angeordnet sind, andererseits aber auch entlang jener Höhe 59 des Steilförderabschnitts 6a verteilt sind, innerhalb welcher die Kronenkorken 21 über die Beschickungsöffnungen 10b in die Übergabestation 8 ausgeblasen werden können bzw. sollen. Die Verteilung der kiemenartigen Öffnungen/Schlitze 53 über die Höhe 59 erfolgt dabei so, dass sie im Bereich der Beschickungsöffnung 10b über die gesamte Höhe 59 verteilt angeordnet sind, im Bereich der Ausblasöffnungen 14b jedoch nur über einen geringeren Abschnitt entlang dieser Höhe. Dadurch wird erreicht, dass die Kronenkorken 21 im Bereich der Beschickungsöffnung 10b schneller ausgeblasen werden, als die hinten anstehenden Kronenkorken 21 im Bereich der Ausblasöffnungen 14b, wodurch ein Kronenkorkenstau zielführend verhindert werden kann.

In einem zweiten Abschnitt 57 des Luftleitelementes 52, der dem Boden 18 der Übergabestation 8 gegenüberliegt, erfolgt die Anordnung der kiemenartigen Öffnungen/Schlitze 53 im wesentlichen linienförmig, so dass diese entlang der gesamten Breite 58b der Übergabestation 8 verteilt angeordnet sind, jedoch gleichzeitig dem Verlauf der an das Luftleitelement 52 angrenzenden unteren Begrenzungswand 9 der Übergabestation 8, leicht oberhalb versetzt, folgend, entlang einer Höhe 60 verteilt, die im wesentlichen dem Durchmesser der Kronenkorken 21 entspricht.

Die Vorsehung des zusätzlichen Luftleitelementes 52 bewirkt, dass die in den Gliedern des Steilförderabschnitts 6a des Entnahmeförderers 6 liegenden Kronenkorken 21 nicht nur beginnend von den Ausblasöffnungen 14b in die Übergabestation 8 ausgeschoben werden, somit ein Kronenkorken den anderen vor sich herschiebend, sondern alle Kronenkorken eines Gliedes des Entnahmeförderers 6 gleichzeitig ausgeschoben werden können.

Durch diese verbesserte Ausblasung der Kronenkorken 21 in die Übergabestation 8, können die Glieder des Entnahmeförderers 6 breiter ausgeführt werden und zwei Entnahmeförderer 6 durch einen einzigen Entnahmeförderer 6 mit der gleichen Breite wie die Gesamtbreite der beiden einzelnen ersetzt werden, wie dies im in den Fig.15 bis 20 gezeigten Ausführungsbeispiel der Fall ist.

Es sei an dieser Stelle jedoch erwähnt, dass ein zusätzliches Luftleitelement 52 jedenfalls zu einer Verbesserung der Ausblasung der Kronenkorken 21 vom Entnahmeförderer 6 beiträgt unabhängig davon, ob die erfindungsgemäße Vorrichtung zwei Entnahmeförderer 6, wie in den Fig.1 bis 14 gezeigt oder einen Entnahmeförderer 6 wie in den Fig.15 bis 20 gezeigt aufweist. Insbesondere erweist sich ein solches Luftleitelement 52 als vorteilhaft im Zusammenhang mit der Ausbildung der unteren Begrenzungswand 9 der Übergabestation 8 mit einem erhöhten Übergabepunkt 50 in Bezug auf die restlichen Bereiche der unteren Begrenzungswand 9, wie dies in Fig.6 strichliert dargestellt ist, da in diesem Fall die Kronenkorken 21 entgegen der Schwerkraft zum höher gelegenen Übergabepunkt 50 befördert werden müssen, was durch die zusätzliche Ausblasleistung des Luftleitelementes 52 sowohl im Bereich des/der Entnahmeförderer 6 als auch im Bereich der Übergabestation 8 unterstützt wird, so dass es offensichtlich ist, dass ein erfindungsgemäßes Luftleitelement 52 auch bei einer Vorrichtung wie in den Fig.1 bis 14 dargestellt, zum Einsatz kommen kann.

Im Falle der Ausführung der erfindungsgemäßen Vorrichtung mit nur einem Entnahmeförderer 6, wie dies in den Fig. 15 bis 20 gezeigt ist, kann es weiters vorgesehen sein, die in die Übergabestation 8 über die Ausblasöffnungen 14b und die kiemenartigen Öffnungen/Schlitze 53 eingeblasene Luft an der den Ausblasöffnungen 14b gegenüberliegenden Seite 61 der Übergabestation 8 wieder abzusaugen.

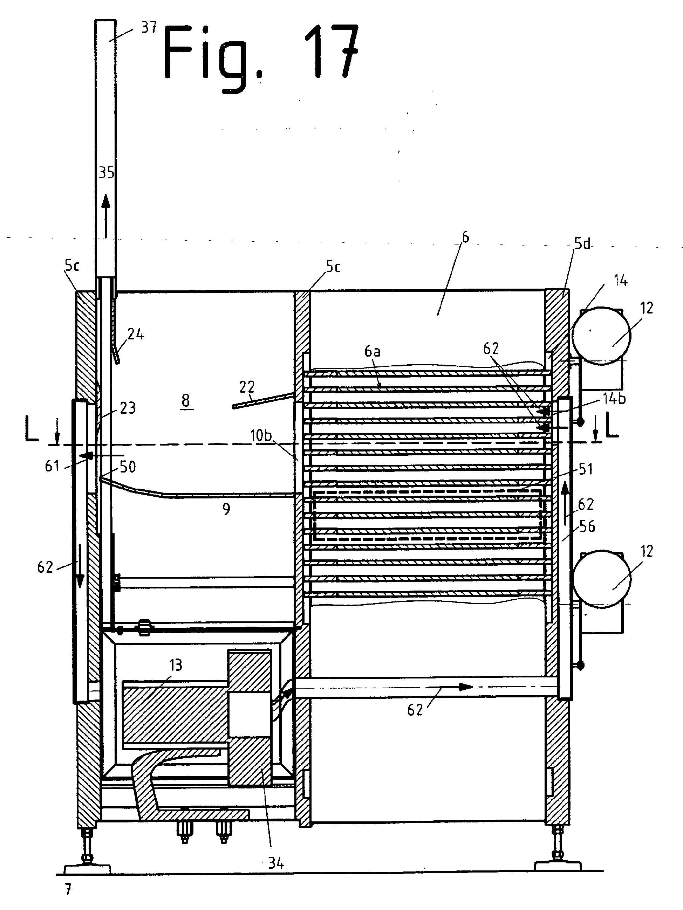

Zu diesem Zweck bietet sich an, die den Ausblasöffnungen 14b gegenüberliegenden Seite 61 der Übergabestation 8 mit der Saugseite der Gebläseeinheit 13 zu verbinden und die Ausblasöffnungen 14b bzw. den Luftführkanal 56 und damit den Hohlraum 52a mit der Druckseite der Gebläseeinheit 13 wodurch der in Fig.17 ersichtliche und mittels der Pfeile 62 gekennzeichnete Ausblasluftkreislauf realisiert werden kann.

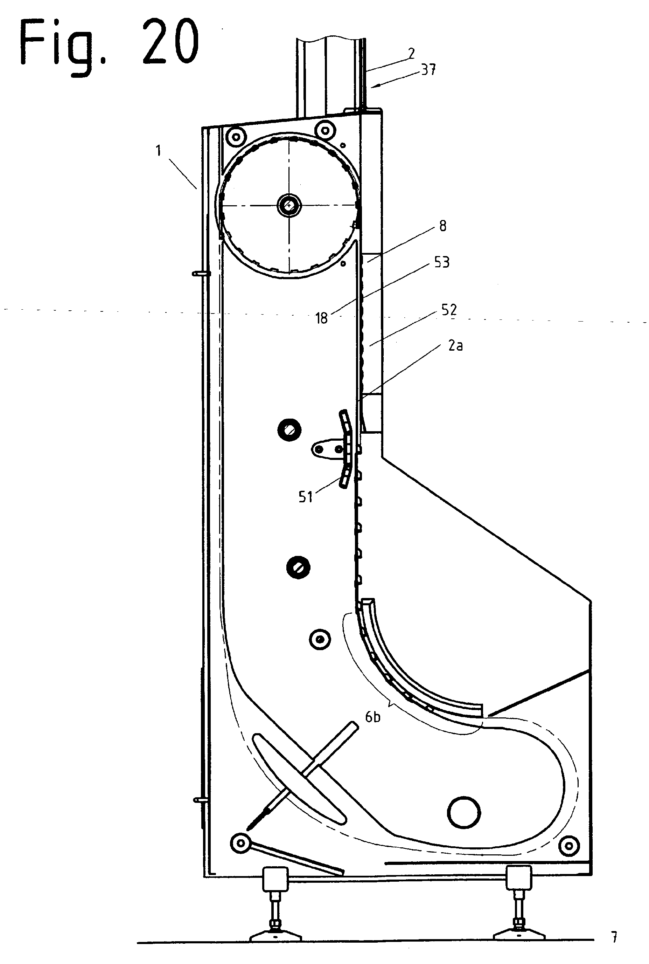

Weiters kann sowohl bei der Ausführungsvariante gemäß Fig.1 bis 14 als auch bei der Ausführungsvariante der Fig.15 bis 20 vorgesehen sein, dass hinter dem Steilförderabschnitt 6a eines Entnahmeförderers 6 auf Höhe der unteren Begrenzungswand 9 der Übergabestation 8 ein Magnetsystem 51 angeordnet ist, um die Kronenkorken 21 in diesem Abschnitt stärker an die Glieder des Entnahmeförderers 6 zu binden, um ein Herabfallen der Kronenkorken 21 in dieser Höhe zu unterbinden und ein Verkeilen der Kronenkorken 21 mit einer in dieser Höhe vor dem Steilförderabschnitt 21 angeordneten Abdeckung zu verhindern. Rein beispielhaft ist die Anordnung eines solchen Magnetsystems mit Bezug auf das Ausführungsbeispiel gemäß den Fig.15 bis 20 in den Fig. 17 und 20 gezeigt.

Rein beispielhaft sind Entnahmeförderer 6 und Fördereinheit 2 in dem Ausführungsbeispiel nach den Fig.15 bis 20 mittels separater Antriebseinheiten 12 angetrieben, um unterschiedliche Fördergeschwindigkeiten rasch realisieren zu können.

**BEZUGSZEICHENLISTE**

| | |
|---|---|
| 1 | Maschinenschrank |
| 2 | Fördereinheit |
| 2a | Teilabschnitt der Fördereinheit |
| 2b | Trum und Auflagefläche der Fördereinheit |
| 3 | Schwerkraftrinne |
| 4 | Endstück |
| 5a, 5b | Kunststoffplatten |
| 5c, 5d | Kunststoffplatten |
| 6 | Entnahmeförderer |
| 6a | Steilförderabschnitt |
| 6b | Flachförderabschnitt |
| 7 | Aufstandsebene |
| 8 | Übergabestation |
| 9 | untere Begrenzungswand |
| 10a, 10b | Beschickungsöffnungen |
| 11 | Krümmungsachse |
| 12 | Antriebsvorrichtung |
| 13 | Gebläseeinheit |
| 14a, 14b | Ausblasöffnungen in Kunststoffplatten |
| 15 | Aufgabeeinheit |
| 16 | Schüttgutteiler |
| 17a, 17b | Vorratsbehälter |
| 18 | Boden der Übergabestation |
| 19 | Deckel der Übergabestation |
| 20 | Abluftöffnungen |
| 21 | Kronenkorken |
| 22 | Prallplatten |
| 23 | Führungselement |
| 24 | Führungselement |
| 25 | Richtungspfeile |
| 26 | Magnet |
| 27 | Halterung |
| 28 | Stellmotor |
| 29 | Glieder der Entnahmeförderer |
| 30 | Mitnahmeelemente |
| 31 | aufgekanteter Endbereich |
| 32 | Aufnahme |
| 33 | Sichtfläche, Referenzfläche |
| 34 | Filterpaket |
| 35 | Förderrichtung der Fördereinheit |
| 36 | Versteifungsprofile |
| 37 | erster Förderabschnitt der Fördereinheit |
| 38 | horizontal verlaufender Förderabschnitt |
| 39 | Spannvorrichtungen für Fördereinheit |
| 40 | Flansche |
| 41 | Stäbe |
| 42 | Führungsausnehmung |
| 43 | Führungsbahn |
| 44 | rücklaufendes Trum |
| 45 | Winkelhalter |
| 46 | Langloch |
| 47 | Übersetzungsgetriebe |
| 48 | Formrohr |
| 49 | Weicheisenelemente |
| 50 | höchster Punkt der unteren Begrenzungswand 9 der Übergabestation |
| 51 | Magnetsystem |
| 52 | zusätzliches Luftleitelement |
| 52a | mit Überdruck beaufschlagter Hohlraum |
| 53 | kiemenartige Öffnungen/Schlitze |
| 54 | seitliche Öffnung des Luftleitelementes |
| 55 | erster Abschnitt des Luftleitelementes |
| 56 | Luftführkanal |
| 57 | zweiter Abschnitt des Luftleitelementes |
| 58 | Breite des Luftleitelementes |
| 58a | Breite des Steilförderabschnitts 6a |
| 58b | Breite der Übergabestation |
| 59 | Höhe der Verteilung der kiemenartigen Öffnungen/Schlitze im ersten Abschnitt des Luftleitelementes |
| 60 | Höhe der Verteilung der kiemenartigen Öffnungen/Schlitze im zweiten Abschnitt des Luftleitelementes |
| 61 | den Ausblasöffnungen 14b gegenüberliegende Seite der Übergabestation |
| 62 | Ausblasluftkreislauf |

## Patentansprüche

1. Vorrichtung zum Vereinzeln und Lageausrichten von metallischen Behälterverschlüssen (21) sowie zum Befördern der vereinzelten und lageausgerichteten Behälterverschlüsse (21), vorzugsweise Kronenkorken, zu einer Weiterverarbeitungsmaschine, vorzugsweise Verschliessmaschine, die Vorrichtung umfassend
- zumindest einen Vorratsbehälter (17a,17b) und/oder Aufgabeeinheit (15) für die Behälterverschlüsse (21),
- zumindest einen Entnahmeförderer (6) zur Entnahme und Vororientierung der Behälterverschlüsse (21) aus dem mindestens einen Vorratsbehälter (17a,17b), wobei der mindestens eine Entnahmeförderer (6) in Betriebsstellung der Vorrichtung einen Steilförderabschnitt (6a) aufweist, dessen Förderoberfläche mit der Aufstandsebene einen Winkel > 30°, vorzugsweise > 80° einschließt, sowie
- zumindest eine, die vereinzelten und lageausgerichteten Behälterverschlüsse (21) zur Weiterverarbeitungsmaschine transportierende Fördereinheit (2), welche die Behälterverschlüsse (21) mittels einer Auflagefläche (2b) an jeweils einer Referenzoberfläche (33) der Behälterverschlüsse kontaktiert,
- sowie eine Übergabestation (8), in welche die Behälterverschlüsse quer zur Förderrichtung des mindestens einen Entnahmeförderers (6) vom Steilförderabschnitt (6a) ausgeblasen werden und mittels welcher die Behälterverschlüsse (21) vereinzelt und lageorientiert an die Fördereinheit (2) übergeben werden
wobei ein unmittelbar nach der Übergabestation (8) angeordneter erster Förderabschnitt (37) der die vereinzelten und lageausgerichteten Behälterverschlüsse (21) befördernden mindestens einen Fördereinheit (2) eine von der Aufstandsebene (7) der Vorrichtung wegweisende Förderrichtungskomponente aufweist, **dadurch gekennzeichnet,**
**dass** die mindestens eine Fördereinheit (2) ein die Behälterverschlüsse (21) förderndes Trum (2b) eines endlosen Fördergurtes oder Glieder- oder Plattenbandes umfasst, das entlang einer als Magnetbalken ausgebildeten, permanent- oder elektromagnetischen Förderbahn und auf dieser zumindest abschnittsweise aufliegend bzw. in geringem Abstand zu dieser geführt ist und die Behälterverschlüsse (21) aus der Übergabestation (8) herausbefördert,
wobei die Magnete (26) des Magnetbalkens im wesentlichen stabförmig ausgebildet sind, mit deren Längsachse parallel zum Trum (2b) verlaufend,
und wobei die Magnete (26) zur Lenkung des magnetischen Felds in Richtung des Trums (2b) U-förmig mit Weicheisenelementen (49) umgeben sind.

2. Vorrichtung nach Anspruch 1, **dadurch gekennzeichnet, dass** ein an den ersten Förderabschnitt (37) anschließender zweiter, in Betriebsstellung der Vorrichtung im wesentlichen horizontal verlaufender Förderabschnitt (38) der mindestens einen Fördereinheit (2) vorgesehen ist, wobei die Krümmungsachse (11) des Übergangs zwischen den beiden Förderabschnitten (37,38) parallel zur Auflagefläche (2b) der Fördereinheit (2) bzw. zur Referenzoberfläche (33) der auf der Fördereinheit (2) transportierten Behälterverschlüsse (21) verläuft und der Übergang vorzugsweise umlenkrollenfrei erfolgt.

3. Vorrichtung nach einem der Ansprüche 1 bis 2, **dadurch gekennzeichnet, dass** die Übergabestation (8) in einer Höhe gemessen von der Aufstandsebene (7) der Vorrichtung zwischen 1m und 3m, vorzugsweise zwischen 1m und 2m angeordnet ist.

4. Vorrichtung nach einem der Ansprüche 1 bis 3, **dadurch gekennzeichnet, dass** die Übergabestation (8) unmittelbar neben dem mindestens einen Entnahmeförderer (6) angeordnet ist und einen im wesentlichen parallel zum Steilförderabschnitt (6a) des Entnahmeförderers (6) angeordneten Boden (18) sowie Deckel (19) umfasst, wobei zumindest eine Beschickungsöffnung (10a,10b) vorgesehen ist, über welche die Behälterverschlüsse (21) vom Entnahmeförderer (6) in die Übergabestation (8) beförderbar sind.

5. Vorrichtung nach Anspruch 4, **dadurch gekennzeichnet, dass** der Abstand zwischen Boden (18) und Deckel (19) das Beschicken der Übergabestation (8) mit Behälterverschlüssen (21) von dem mindestens einen Entnahmeförderer (6) mit Bezug auf deren Referenzfläche (33) lediglich in jener Lage ermöglicht, in welcher die Behälterverschlüsse im Entnahmeförderer (6) transportiert werden.

6. Vorrichtung nach einem der Ansprüche 4 oder 5, **dadurch gekennzeichnet, dass** ein Teilabschnitt (2a) der mindestens einen Fördereinheit (2) einen Abschnitt des Bodens (18) der Übergabestation (8) bildet, so dass die von dem mindestens einen Entnahmeförderer (6) in die Übergabestation (8) beförderten und vororientierten Behälterverschlüsse (21) abhängig zumindest von der Menge und der Geometrie der Übergabestation (8) dem Zufallsprinzip folgend mit ihrer Referenzoberfläche (33) auf der Fördereinheit (2) zu liegen kommen.

7. Vorrichtung nach einem der Ansprüche 4 bis 6, **dadurch gekennzeichnet, dass** eine Boden (18) und Deckel (19) miteinander verbindende, in Betriebsstellung der Vorrichtung untere Begrenzungswand (9) der Übergabestation (8) vorgesehen ist, welche einen in Betriebsstellung der Vorrichtung tiefsten Punkt als Übergabepunkt (50) aufweist, der unterhalb der mindestens einen Beschickungsöffnung (10a,10b) und über der im Boden (18) der Übergabestation (8) vorgesehenen mindestens einen Fördereinheit (2) angeordnet ist.

8. Vorrichtung nach einem der Ansprüche 4 bis 6, **dadurch gekennzeichnet, dass** eine Boden (18) und Deckel (19) miteinander verbindende, in Betriebsstellung der Vorrichtung untere Begrenzungswand (9) der Übergabestation (8) vorgesehen ist, welche in Betriebsstellung der Vorrichtung einen höchsten Punkt als Übergabepunkt (50) aufweist, der über der im Boden (18) der Übergabestation vorgesehenen mindestens einen Fördereinheit (2) angeordnet ist.

9. Vorrichtung nach einem der Ansprüche 1 bis 8, **dadurch gekennzeichnet, dass** der mindestens eine Entnahmeförderer (6) ein, vorzugsweise aus korrosions- und/oder säurebeständigem Stahl gefertigter, endloser Gliederbandförderer ist mit einem in den Vorratsbehälter (17a,17b) eintauchenden Flachförderabschnitt (6b), dessen einzelne Glieder (29) in Förderrichtung gesehen einen ersten Endabschnitt aufweisen, der ein mit einer Fase versehenes Mitnahmeelement (30) trägt, und einen zweiten Endabschnitt, in welchem die Glieder (29) vorzugsweise aufgekantet ausgebildet sind und der Bereich zwischen dem Mitnahmeelement (30) und der vorzugsweisen Aufkantung zur Aufnahme der Behälterverschlüsse (21) in einer Reihe nebeneinander vorgesehen ist.

10. Vorrichtung nach einem der Ansprüche 4 bis 9, **dadurch gekennzeichnet, dass** im Bereich der mindestens einen Beschickungsöffnung (10a,10b) mindestens eine von einer Gebläseeinheit (13) angesteuerte Ausblasöffnung (14a,14b) angeordnet ist, um die Behälterverschlüsse (21) vom mindestens einen Entriahmeförderer (6) reihenweise in die Übergabestation (8) zu befördern.

11. Vorrichtung nach einem der Ansprüche 7 bis 10, **dadurch gekennzeichnet, dass** ein zusätzliches Luftleitelement (52) vorgesehen ist, welches parallel zum Deckel (19) verlaufend, vorzugsweise integraler Bestandteil des Deckels (19) seiend, sowohl zumindest einen Bereich des Steilförderabschnitts (6a) als auch zumindest einen Bereich der Übergabestation (8) überdeckend angeordnet ist und in die Übergabestation (8) und/oder auf den Steilabschnitt (6a) gerichtete, von einer Gebläseeinheit (13) angesteuerte Öffnungen/Schlitze (53) aufweist, um die Behälterverschlüsse (21) einerseits vom Steilförderabschnitt (6a) reihenweise in die Übergabestation (8) zu befördern und andererseits um bereits in der Übergabestation (8) befindliche Behälterverschlüsse (21) in Richtung Übergabepunkt (50) zu befördern.

12. Vorrichtung nach einem der Ansprüche 1 bis 11, **dadurch gekennzeichnet, dass** die Fördergeschwindigkeit der mindestens einen Fördereinheit (2) ein Vielfaches der Fördergeschwindigkeit des mindestens einen Entnahmeförderers (6) beträgt.

13. Vorrichtung nach einem der Ansprüche 1 bis 12, **dadurch gekennzeichnet, dass** die Breite des Trums (2b) des Förderbandes der mindestens einen Fördereinheit (2) kleiner oder gleich ist als die größte Breite der zu befördernden Behälterverschlüsse (21).

14. Vorrichtung nach einem der Ansprüche 4 bis 12, **dadurch gekennzeichnet, dass** der Steilförderabschnitt (6a) des Entnahmeförderers (6), Boden (18) und Deckel (19) der Übergabestation (8) sowie der erste Förderabschnitt (37) der Fördereinheit (2) senkrecht verlaufend angeordnet sind.

15. Vorrichtung nach einem der Ansprüche 9 bis 14, **dadurch gekennzeichnet, dass** auf der von den Mitnahmelementen (30) des Steilförderabschnitts (6a) abgewandten Seite des mindestens einen Entnahmeförderers (6) ein Magnetsystem (51) angeordnet ist.

16. Vorrichtung nach einem der Ansprüche 1 bis 15, **dadurch gekennzeichnet, dass** zwei parallel zu einander verlaufende Entnahmeförderer (6) vorgesehen sind und die Übergabestation (8) sowie eine die vereinzelten und lageausgerichteten Behälterverschlüsse (21) zur Weiterverarbeitungsmaschine transportierende Fördereinheit (2) zwischen den Entnahmeförderern (6) angeordnet ist, wobei die Übergabestation (2) zwei Beschickungsöffnungen aufweist.

17. Vorrichtung nach Anspruch 16, **dadurch gekennzeichnet, dass** die Relativposition der beiden Entnahmeförderer (6) zueinander während des Förderns konstant ist und entweder die Mitnahmeelemente (30) an den einzelnen Gliedern (29) in Bezug auf deren Vertikalabstand zur Aufstandsebene (7) der Vorrichtung stets unterschiedlich positioniert sind oder die beiden Beschickungsöffnungen (10a,10b) einen unterschiedlichen Vertikalabstand zur Aufstandsebene (7) der Vorrichtung aufweisen.

18. Vorrichtung nach Anspruch 16 oder 17, **dadurch gekennzeichnet, dass** die untere Begrenzungswand (9) der Übergabestation (8) V-förmig ausgebildet ist, wobei jeder Schenkel jeweils den tiefsten Punkt einer Beschickungsöffnung (10a,10b) mit dem tiefsten Punkt der Übergabestation (8) in Bezug auf die Aufstandsebene (7) verbindet.

19. Vorrichtung nach einem der Ansprüche 16 bis 18, **dadurch gekennzeichnet, dass** zwischen den beiden Entnahmeförderern (6) und in Betriebsstellung der Vorrichtung unterhalb der Übergabestation (8) eine Aufgabeeinheit (15) vorgesehen ist, welche einen vorzugsweise keilförmigen Schüttgutteiler (16) aufweist, der die zu vereinzelnden und lageauszurichtend zuzuführenden Behälterverschlüsse (21) auf die beiden Entnahmeförderer (6) aufteilt.

20. Vorrichtung nach Anspruch 19, **dadurch gekennzeichnet, dass** der Schüttgutteiler (16) zwischen den Entnahmeförderern (6) beweglich angeordnet ist, um das Aufteilungsverhältnis der aufgegebenen Behälterverschlüsse (21) auf die beiden Entnahmeförderer (6) beeinflussen zu können.

21. Vorrichtung nach einem der Ansprüche 1 bis 20, **dadurch gekennzeichnet, dass** zwischen Fördereinheit (2) und Weiterverarbeitungsmaschine eine Schwerkraftrinne (3) angeordnet ist, welche eine Führungsbahn (43) aufweist, auf welcher die Behälterverschlüsse (21) aufgrund der Schwerkraft in Richtung zur Weiterverarbeitungsmaschine rutschen und die Führungsbahn (43) aus Kunststoff, vorzugsweise Polyethylen oder Teflon ausgebildet ist bzw. mit einem aus Kunststoff, vorzugsweise Polyethylen oder Teflon aufgebauten Belag zumindest im Kontaktbereich mit den Behälterverschlüssen (21) versehen ist.

22. Vorrichtung nach einem der Ansprüche 1 bis 21, **dadurch gekennzeichnet, dass** es sich bei den Behälterverschlüssen (21) um Kronenkorken handelt und die Referenzoberfläche (33) vom Rücken der Kronekorken gebildet ist.

## Claims

1. Device for separation and position alignment of metallic container closures (21), as well as for conveying the separated and position-aligned container closures (21), preferably crown corks, to a further processing machine, preferably sealing machine, the device comprising
- at least one supply container (17a, 17b) and/or application unit (15) for the container closures (21),
- at least one removal conveyor (6) for removal and preorientation of the container closures (21) from the at least one supply container (17a, 17b), whereby the at least one removal conveyor (6) has a steep conveying section (6a) in the operating position of the device, the conveying surface of which section encloses an angle > 30°, preferably > 80°, with the support plane, as well as
- at least one conveying unit (2) that transports the separated and position-aligned container closures (21) to the further processing machine and contacts the container closures (21) by means of a contact surface (2b), at a reference surface (33) of the container closures, in each instance,
- as well as a transfer station (8) in which the container closures are blown out from the steep conveying section (6a) transverse to the conveying direction of the at least one removal conveyor (6), and by means of which station the container closures (21) are passed on to the conveying unit (2) in separated and position-oriented manner,
- whereby a first conveying section (37) of the at least one conveying unit (2) that conveys the separated and position-oriented container closures (21), disposed directly behind the transfer station (8), has a conveying direction component that faces away from the support plane (7) of the device, **characterized in that** the at least one conveying unit (2) comprises a run (2b) of an endless conveyor belt or link belt or plate belt, which conveys the container closures (21), is guided along a permanently magnetic or electromagnetic conveyor track configured as a magnetic bar, lying on this track at least in sections, or at a slight distance from it, and conveys the container closures (21) out of the transfer station (8), the magnets (26) of the magnetic bar being configured essentially in bar shape with their longitudinal axis running parallel to the run (2b), and with the magnets (26) being surrounded by soft iron elements (49)in a U-shaped manner for guiding the magnetic field towards the run (2b).

2. Device according to claim 1, **characterized in that** a second conveying section (38) of the at least one conveying unit (2), following the first conveying section (37), running essentially horizontal in the operating position of the device, is provided, whereby the curvature axis (11) of the transition between the two conveying sections (37, 38) runs parallel to the contact surface (2b) of the conveying unit (2) or to the reference surface (33) of the container closures (21) transported on the conveying unit (2), and the transition preferably takes place in deflection-roller-free manner.

3. Device according to one of claims 1 to 2, **characterized in that** the transfer station (8) is disposed at a height, measured from the support plane (7) of the device, between 1 m and 3 m, preferably between 1 m and 2 m.

4. Device according to one of claims 1 to 3, **characterized in that** the transfer station (8) is disposed directly next to the at least one removal conveyor (6) and comprises a bottom (18) disposed essentially parallel to the steep conveying section (6a) of the removal conveyor (6), as well as a lid (19), whereby at least one charging opening (10a, 10b) is provided, by way of which the container closures (21) can be conveyed from the removal conveyor (6) into the transfer station (8).

5. Device according to claim 4, **characterized in that** the distance between bottom (18) and lid (19) allows charging of the transfer station (8) with container closures (21) from the at least one removal conveyor (6), with reference to their reference surface (33), only **in that** position in which the container closures are transported in the removal conveyor (6).

6. Device according to one of claims 4 or 5, **characterized in that** a partial section (2a) of the at least one conveying unit (2) forms a section of the bottom (18) of the transfer station (8), so that the container closures (21) conveyed into the transfer station (8) and pre-oriented, by the at least one removal conveyor (6), come to lie on the conveying unit (2) with their reference surface (33) as a function at least of the amount and of the geometry of the transfer station (8), in accordance with the principle of randomness.

7. Device according to one of claims 4 to 6, **characterized in that** a lower delimitation wall (9) of the transfer station (8), in the operating position of the device, is provided, which wall connects bottom (18) and lid (19) with one another and has a lowest point, in the operating position of the device, as a transfer point (50), which point is disposed below the at least one charging opening (10a, 10b) and above the at least one conveying unit (2) provided in the bottom (18) of the transfer station (8).

8. Device according to one of claims 4 to 6, **characterized in that** a lower delimitation wall (9) of the transfer station (8), in the operating position of the device, is provided, which wall connects bottom (18) and lid (19) with one another and has a highest point, in the operating position of the device, as a transfer point (50), which point is disposed above the at least one conveying unit (2) provided in the bottom (18) of the transfer station (8).

9. Device according to one of claims 1 to 8, **characterized in that** the at least one removal conveyor (6) is an endless link belt conveyor preferably manufactured from corrosion-resistant and/or acid-resistant steel, having a flat conveying section (6b) that submerges into the supply container (17a, 17b), the individual links (29) of which section, seen in the conveying direction, have a first end section that carries an entrainment element (30) provided with a bevel, and a second end section in which the links (29) are preferably configured to be turned up, and the region between the entrainment element (30) and the preferable turn-up is provided for accommodating the container closures (21) in a row, next to one another.

10. Device according to one of claims 4 to 9, **characterized in that** at least one blow-out opening (14a, 14b) controlled by a blower unit (13) is disposed in the region of the at least one charging opening (10a, 10b), in order to convey the container closures (21) from the at least one removal conveyor (6) into the transfer station (8), row by row.

11. Device according to one of claims 7 to 10, **characterized in that** an additional air guide element (52) is provided, which is disposed to run parallel to the lid (19), preferably to be an integral part of the lid (19), to cover at least one region of the steep conveyor section (6a) and at least one region of the transfer station (8), and has openings/slits (53) directed into the transfer station (8) and/or onto the steep section (6a), controlled by a blower unit (13), in order to convey the container closures (21) from the steep conveying section (6a), row by row, into the transfer station (8), on the one hand, and to convey the container closures (21) that are already situated in the transfer station (8) towards the transfer point (50), on the other hand.

12. Device according to one of claims 1 to 11, **characterized in that** the conveying velocity of the at least one conveying unit (2) amounts to a multiple of the conveying velocity of the at least one removal conveyor (6).

13. Device according to one of claims 1 to 12, **characterized in that** the width of the run (2b) of the conveyor belt of the at least one conveying unit (2) is less than or equal to the greatest width of the container closures (21) to be conveyed.

14. Device according to one of claims 4 to 12, **characterized in that** the steep conveying section (6a) of the removal conveyor (6), bottom (18) and lid (19) of the transfer station (8), as well as the first conveying section (37) of the conveying unit (2) are disposed to run vertically.

15. Device according to one of claims 9 to 14, **characterized in that** a magnetic system (51) is disposed on the side of the at least one removal conveyor (6) that faces away from the entrainment elements (30) of the steep conveying section (6a).

16. Device according to one of claims 1 to 15, **characterized in that** two removal conveyors (6) that run parallel to one another are provided, and the transfer station (8) as well as a conveying unit (2) that transports the separated and position-aligned container closures (21) to the further processing machine is disposed between the removal conveyors (6), whereby the transfer station (2) has two charging openings.

17. Device according to claim 16, **characterized in that** the relative position of the two removal conveyors (6) with regard to one another is constant during conveying, and either the entrainment elements (30) on the individual links (29) are always positioned differently with reference to their vertical distance from the support plane (7) of the device, or the two charging openings (10a, 10b) have a different vertical distance from the support plane (7) of the device.

18. Device according to claim 16 or 17, **characterized in that** the lower delimitation wall (9) of the transfer station (8) is configured in V shape, whereby each shank connects the lowest point of a charging opening (10a, 10b), in each instance, with the lowest point of the transfer station (8), with reference to the support plane (7).

19. Device according to one of claims 16 to 18, **characterized in that** an application unit (15) is provided between the two removal conveyors (6) and below the transfer station (8), in the operating position of the device, which unit has a preferably wedge-shaped bulk material distributor (16) that divides the container closures (21) to be separated and fed in in a position-aligned way, between the two removal conveyors (6).

20. Device according to claim 19, **characterized in that** the bulk material distributor (16) is movably disposed between the removal conveyors (6), in order to be able to influence the division ratio of the container closures (21) that are applied, between the two removal conveyors (6).

21. Device according to one of claims 1 to 20, **characterized in that** a gravity channel (3) is disposed between conveying unit (2) and further processing machine, which channel has a guide track (43) on which the container closures (21) slide towards the further processing machine, due to gravity, and the guide track (43) is formed from plastic, preferably polyethylene or Teflon, or is provided with a coating composed of plastic, preferably polyethylene or Teflon, at least in the contact region with the container closures (21).

22. Device according to one of claims 1 to 21, **characterized in that** the container closures (21) are crown corks and the reference surface (33) is formed by the back of the crown corks.

## Revendications

1. Dispositif servant à désolidariser et disposer des fermetures métalliques de contenants (21) ainsi qu'à transporter les fermetures de contenants (21) désolidarisées et disposées, de préférence des capsules, vers une machine de transformation, de préférence une machine à encapsuler, le dispositif comprenant
- Au moins un réservoir (17a, 17b) et/ou une unité de remise (15) pour les fermetures de contenant (21),
- Au moins un convoyeur de prélèvement (6) pour prélever et prédisposer les fermetures de contenant (21) à partir du réservoir (17a, 17b) au moins au nombre de un, sachant que le convoyeur de prélèvement (6) au moins au nombre de un, présente une section de transport verticale (6a) dont la surface de convoyage dessine un angle > 30° , de préférence > 80° avec la surface de levage lorsque le dispositif est en position de service, ainsi que
- Au moins une unité de transport (2) transportant les fermetures de contenant (21) désolidarisées et orientées vers la machine de transformation, laquelle contacte les fermetures de contenant (21) à une surface de référence (33) des fermetures de contenant à l'aide d'une surface d'appui (2b)
- Ainsi qu'une station de transfert (8) dans laquelle les fermetures de contenant sont propulsés hors de la section de transport verticale (6a) perpendiculairement au sens de transport du convoyeur de prélèvement (6) au moins au nombre de un, et à l'aide de laquelle les fermetures de contenant (21) sont remises isolément et orientées à l'unité de transport (2)
sachant qu'une première section de transport (37) de l'unité de transport (2) au moins au nombre de une et transportant les fermetures de contenant (21) isolées et positionnées, directement disposée après la station de transfert (8) présente un composant donnant le sens de transport depuis la zone de soulèvement (7) du dispositif, **caractérisé en ce que**
l'unité de transport (2) au moins au nombre de une, englobe un compartiment (2b) d'une sangle de transport sans fin ou d'une bande à membres ou à plaques transportant les fermetures de contenant (21), passant le long d'une ligne de transport permanente ou électromagnétique conçue comme une poutre magnétique, reposant du moins en partie sur celle-ci ou dirigée à une distance restreinte de celle-ci et propulsant les fermetures de contenant (21) hors de la station de transfert (8). sachant que ces aimants (26) de la poutre magnétique sont essentiellement en forme de tige dont l'axe longitudinal est parallèle au compartiment (2b),
et sachant que les aimants (26) sont entourés en forme de U d'éléments en fer doux (49) afin d'orienter le champ magnétique dans le sens du compartiment (2b).

2. Dispositif selon la revendication 1, **caractérisé en ce qu'**est prévue une deuxième section de transport (38) de l'unité de transport (2) au moins au nombre de une, essentiellement horizontale en position de service du dispositif et raccordée à la première section de transport (37), sachant que l'axe de courbure (11) de transition entre les deux sections de transport (37, 38) est parallèle à la surface d'appui (2b) de l'unité de transport (2) et à la surface supérieure de référence (33) des fermetures de contenant (21) transportées sur l'unité de transport (2) et que la transition se fait de préférence sans galet de renvoi.

3. Dispositif selon l'une des revendications 1 à 2, **caractérisé en ce que** la station de transfert (8) est disposée à une hauteur mesurée à partir de la zone de soulèvement (7) du dispositif comprise entre 1m et 3m, de préférence entre 1m et 2m.

4. Dispositif selon l'une des revendications 1 à 3 **caractérisée en ce que** la station de transfert (8) est disposée directement à côté du convoyeur de prélèvement (6) au moins au nombre de un et comporte un fond (18) et un couvercle (19) essentiellement parallèles à la section de transport verticale (6a) du convoyeur de prélèvement (6), sachant qu'au moins une ouverture de chargement (10a, 10b) est prévue et au moyen de laquelle les fermetures de contenant (21) sont transportées du convoyeur de prélèvement (6) à la station de transfert (8).

5. Dispositif selon la revendication 4, **caractérisé en ce que** l'écart entre le fond (18) et le couvercle (19) ne permet le chargement de la station de transfert (8) avec des fermetures de contenant (21) du convoyeur de prélèvement (6) au moins au nombre de un en fonction de leur surface de référence (33) que dans la position dans laquelle les fermetures de contenant sont transportés dans le convoyeur de prélèvement (6).

6. Dispositif selon l'une des revendications 4 ou 5, **caractérisé en ce qu'**une section partielle (2a) de l'unité de transport (2) au moins au nombre de une, constitue une section du fond (18) de la station de transfert (8) de telle sorte que les fermetures de contenant (21) transportées et positionnées du convoyeur de prélèvement (6) au moins au nombre de un à la station de transfert (8) atterrissent sur l'unité de transport (2) sur leur surface supérieure de référence (33) en fonction au moins de la quantité et de la géométrie de la station de transfert (8) et selon le principe aléatoire.

7. Dispositif selon l'une des revendications 4 à 6, **caractérisé en ce qu'**une paroi de limitation (9) de la station de transfert (8) inférieure en position de service du dispositif, reliant le fond (18) et le couvercle (19) entre eux est prévue, laquelle présente un point inférieur faisant office de point de transfert (50) en position de service du dispositif, lequel est disposé en-dessous de l'ouverture de chargement (10a, 10b) au moins au nombre de une, et au-dessus de l'unité de transport (2) au moins au nombre de une et prévue dans le fond (18) de la station de transfert (8).

8. Dispositif selon l'une des revendications 4 à 6, **caractérisée en ce qu'**une paroi de délimitation (9) de la station de transfert (8), inférieure en position de service du dispositif, reliant le fond (18) et le couvercle (19) entre eux est prévue, laquelle présente un point supérieur faisant office de point de transfert (50) en position de service du dispositif, lequel est disposé au-dessus de l'unité de transport (2) au moins au nombre de une et prévue dans le fond (18) de la station de transfert.

9. Dispositif selon l'une des revendications 1 à 8, **caractérisé en ce que** le convoyeur de prélèvement (6) au moins au nombre de un, fabriqué de préférence en acier anticorrosion et/ou résistant aux acides, est un convoyeur à bande à membrures sans fin avec une section de transport plate (6b) plongeant dans le réservoir (17a, 17b), dont chaque membre (29), observé dans le sens du transport, présente une première section d'extrémité portant un élément d'entraînement (30) doté d'un chanfrein et une deuxième section d'extrémité dans laquelle les membres (29) ont de préférence un bord relevé et la zone entre l'élément d'entraînement (30) et le bord relevé privilégié est prévu pour réceptionner les fermetures de contenant (21) alignés les unes à côté des autres.

10. Dispositif selon l'une des revendications 4 à 9, **caractérisé en ce qu'**au niveau de l'ouverture d'entraînement (10a, 10b) au moins au nombre de une, est disposée au moins une ouverture d'évacuation (14a, 14b) actionnée par une soufflerie (13) et destinée à transporter les fermetures de contenant (21) alignés du convoyeur de prélèvement (6) au moins au nombre de un à la station de transfert (8).

11. Dispositif selon l'une des revendications 7 à 10, **caractérisé en ce qu'**un élément conducteur d'air (52) supplémentaire est prévu, lequel est parallèle au couvercle (19), de préférence faisant partie intégrante du couvercle (19) et est disposé de sorte à recouvrir au moins une partie de la section de transport verticale (6a) et au moins une partie de la station de transfert (8) et présente une ouverture/fente (53) actionnée par une soufflerie (13) dans la station de transfert (8) et/ou dirigée vers la section verticale (6a) pour transporter les fermetures de contenant (21) alignées d'une part de la section de transport verticale (6a) à la station de transfert (8) et pour transporter d'autre part les fermetures de contenant (21) se trouvant déjà dans la station de transfert (8) en direction du point de transfert (50).

12. Dispositif selon l'une des revendications 1 à 11, **caractérisé en ce que** la vitesse de transport de l'unité de transport (2) au moins au nombre de une correspond à un multiple de la vitesse de transport du convoyeur de prélèvement (6) au moins au nombre de un.

13. Dispositif selon l'une des revendications 1 à 12, **caractérisé en ce que** la largeur du compartiment (2b) de la bande de transport de l'unité de transport (2) au moins au nombre de une est plus petite ou égale à la plus grande largeur des fermetures de contenant (21) à transporter.

14. Dispositif selon l'une des revendications 4 à 12, **caractérisé en ce que** la section de transport verticale (6a) du convoyeur de prélèvement (6), le fond (18) et le couvercle (19) de la station de transfert (8) ainsi que la première section de transport (37) de l'unité de transport (2) sont verticaux.

15. Dispositif selon l'une des revendications 9 à 14, **caractérisé en ce qu'**un système magnétique (51) est placé sur la face du convoyeur de prélèvement (6) au moins au nombre de un opposée aux éléments d'entraînement (30) de la section de transport verticale (6a).

16. Dispositif selon l'une des revendications 1 à 15, **caractérisé en ce que** sont prévus deux convoyeurs de prélèvement (6) parallèles et **en ce que** la station de transfert (8) ainsi qu'une unité de transport (2) transportant les fermetures de contenant (21) isolées et positionnées vers une machine de transformation sont disposées entre les convoyeurs de prélèvement (6), sachant que la station de transfert (2) présente deux ouvertures de chargement.

17. Dispositif selon la revendication 16, **caractérisé en ce que** la position relative des deux convoyeurs de prélèvement (6) l'un par rapport à l'autre est constante pendant le transport et **en ce que** soit les éléments d'entraînement (30) sur les membrures (29) sont sans cesse positionnés différemment par rapport à leur écart vertical avec la zone de soulèvement (7) du dispositif soit les deux ouvertures de chargement (10a, 10b) présentent un écart vertical différent avec la zone de soulèvement (7) du dispositif.

18. Dispositif selon la revendication 16 ou 17, **caractérisé en ce que** la paroi de délimitation inférieure (9) de la station de transfert (8) est en forme de V, sachant que chaque côté relie respectivement le point le plus bas d'une ouverture de chargement (10a, 10b) au point le plus bas de la station de transfert (8) par rapport à la zone de soulèvement (7).

19. Dispositif selon l'une des revendications 16 à 18, **caractérisé en ce qu'**entre les deux convoyeurs de prélèvement (6) et, en position de service du dispositif, en-dessous de la station de transfert (8) est prévue une unité de remise (15), laquelle présente un déverseur de matière en vrac (16) de préférence en forme de coin, lequel distribue les fermetures de contenant (21) isolées et positionnées sur les deux convoyeurs de prélèvement (6).

20. Dispositif selon la revendication 19, **caractérisé en ce que** le déverseur de matière en vrac (16) est placé entre les convoyeurs de prélèvement (6) tout en étant mobile afin d'influencer la distribution des fermetures de contenant (21) transférés sur les deux convoyeurs de prélèvement (6).

21. Dispositif selon l'une des revendications 1 à 20, **caractérisé en ce qu'**entre l'unité de transport (2) et la machine de transformation, une gouttière de gravitation (3) est disposée, laquelle présente une ligne de guidage (43), sur laquelle les fermetures de contenant (21) glissent en raison de la force gravitationnelle en direction de la machine de transformation, la ligne de guidage (43) étant en plastique, de préférence en polyéthylène ou en téflon ou recouverte d'une couche en plastique, de préférence en polyéthylène ou en téflon, du moins au niveau de la zone de contact avec les fermetures de contenant (21).

22. Dispositif selon l'une des revendications 1 à 21, **caractérisé en ce que** les fermetures de contenant (21) sont en fait des capsules et les surfaces supérieures de référence (33) sont formées par le dos des capsules.
